# EUROPEAN PATENT SPECIFICATION

(11) **EP 3 473 847 B1**
(45) Date of publication and mention of the grant of the patent: **21.04.2021**
(21) Application number: 18200377.2
(22) Date of filing: 15.10.2018
(51) Int. Cl.: F03D 1/02

(54) **WIND TURBINE GENERATOR**
WINDTURBINENGENERATOR
GÉNÉRATEUR DE TURBINE ÉOLIENNE

(30) Priority: 16.10.2017 JP 2017200658; 17.10.2017 JP 2017201295; 30.10.2017 JP 2017209416; 30.10.2017 JP 2017209498
(43) Date of publication of application: 24.04.2019
(73) Proprietor: MITSUBISHI HEAVY INDUSTRIES, LTD., Tokyo 108-8215 (JP)
(72) Inventor: MORISHITA, Kunihiro, Tokyo 108-8215 (JP); KATO, Motoki, Tokyo 108-8215 (JP); HASHIMOTO, Yukihiro, Tokyo 108-8215 (JP); KATSUURA, Hiroshi, Tokyo 108-8215 (JP)
(74) Representative: Cabinet Beau de Loménie

(56) References cited:
- WO-A1-2017/108057
- WO-A1-2017/144063
- DE-A1- 3 713 024
- DE-B3-102012 020 052
- GB-A- 2 443 886

## Description

### [Technical Field]

The present invention relates to a wind turbine generator.

### [Background Art]

A wind turbine generator is typically configured to have only one wind turbine part installed with respect to one tower part. The wind turbine part is made up of blades, a rotor shaft, a power generator, a nacelle, and the like. There is also known a so-called multirotor wind turbine generator having a plurality of wind turbine parts installed for one tower part. In the multirotor wind turbine generator, a total swept area of the wind turbine part is large, and generated energy (output power) obtained from one tower part is thus large.

Patent Literature described below each disclose a technique concerning the multirotor wind turbine generator.

### [Citation List]

### [Patent Literature]

[PTL 1]
   PCT International Publication No. WO 2017/108057
[PTL 2]
   GE No. 102012020052
[PTL 3]
   PCT International Publication No. WO 2017/008818
   WO 2017/144063 discloses a wind turbine system with multiple rotors
[PTL 4]
   DE 3713024 A1 discloses a wind turbine with multiple rotors.

### [Summary of Invention]

### [Technical Problem]

In the multirotor wind turbine generator, a plurality of support members (arms) are provided in the tower part, and the wind turbine part is installed on each support member.

The support members may be made up of an elongated member that mainly bears a compressive force and a wire member that bears a compressive force or a pulling force. The elongated member is axially extended in a horizontal direction or a tilting direction. The elongated member is, for example, a tubular member having a circular cross section or a member having a truss structure formed of a plurality of members in combination.

When at least one of right and left support members, on which the wind turbine parts are installed, falls off the tower part due to breaking of the wire member supporting a perpendicular load or other reason, the support member or the wind turbine part might collide with the tower part or come into contact with the blade of the wind turbine part installed on the support member on the opposite side. Further, when the wind turbine parts are installed vertically over a plurality of levels, if the upper-level support member falls off the tower part, the blade of the upper-level wind turbine part might come into contact with the blade of the lower-level window turbine part.

The present invention has been made in view of such circumstances, and it is an object of the present invention to provide a wind turbine generator that is capable of avoiding contact of a support member and a blade of a wind turbine part installed on the support member, with a tower part and a blade of the other wind turbine part when the support member falls.

### [Solution to Problem]

A wind turbine generator of the present invention includes: a tower part; a plurality of wind turbine parts each including a rotor, blades provided on the rotor, and a power generator that generates power by a rotational force of the rotor; a support member that is connected to the tower part and supports the wind turbine part; and an auxiliary member made of a wire and having one end connected to the tower part and the other end connected to the support member.

With this configuration, when the support member comes off, the tower part supports loads of the support member and the wind turbine part via the auxiliary member being a linear wire.

The auxiliary member is configured so as to prevent the falling of the support member or the shaking of the support member in a front-rear direction when the support member comes off the tower part, so that it is possible to avoid the contact of the support member and the blade of the wind turbine part installed on the support member with the tower part or the blade of the other wind turbine part.

In the above invention, the support member may include a connection part connected to the tower part, an elongated member having one end side connected to the connection part and the other end side supporting the wind turbine part, a first coupling member having one end side connected to one end side of the elongated member and the other end side provided above the elongated member, and a linear first wire member having one end connected to the other end side of the first coupling member and the other end connected to the other end side of the elongated member, and the auxiliary member may be configured so as to prevent falling of the elongated member.

With this configuration, the support member is connected to the tower part via the connection part of the support member, one end side of the elongated member is connected to the connection part, and the other end side of the elongated member supports the wind turbine part. One end side of the first coupling member is connected to the one end side of the elongated member, and the other end side of the first coupling member is provided above the elongated member. One end of the wire member is connected to the other end side of the first coupling member, and the other end of the wire member is connected to the other end side of the elongated member, so that the wire member is disposed in a direction tilted with respect to the horizontal direction.

Therefore, concerning a perpendicular load that acts on the wind turbine part, the elongated member bears a compressive force, and the wire member bears a pulling force. For example, when the wire member comes off due to being broken or for other reason, the auxiliary member prevents the elongated member from falling.

In the above invention, the auxiliary member may be a linear wire and may have one end connected to the first coupling member and the other end connected to the elongated member.

With this configuration, when the wire member comes off due to being broken or for other reason, the other support member and tower part support loads of the support member and the wind turbine part via the auxiliary member being a linear wire.

In the above invention, the auxiliary member may be a linear wire and may have one end connected to the support member disposed on one side with respect to the tower part, and the other end connected to another support member disposed on the other side being an opposite side across the tower part.

With this configuration, when the wire member comes off due to being broken or for other reason, the other support member and tower part support loads of the support member and the wind turbine part via the auxiliary member being a linear wire.

In the above invention, the auxiliary member may be a structural body having rigidity and may have one end connected to the tower part and the other end disposed away from a bottom of the support member.

With this configuration, when the wire member comes off due to being broken or for other reason, the tower part supports loads of the support member and the wind turbine part via the support structure.

In the above invention, a plurality of levels of the support members may be disposed vertically, and the auxiliary member may be a linear wire and may have one end connected to the support member disposed on an upper side and the other end connected to another support member disposed on a lower side.

With this configuration, when the wire member of the lower-side support member comes off due to being broken or for other reason, the support member and the tower part support on the upper side support loads of the support member and the wind turbine part via the auxiliary member being a linear wire.

In the above invention, a plurality of levels of the support members may be disposed vertically, and the wind turbine generator may include: a detection part capable of detecting attachment and detachment of the support member disposed on the upper side to and from the tower part; and a rotation drive part that rotates the support members disposed on the upper side and/or the lower side around the tower part when the detection part detects the support member that comes off the tower part.

With this configuration, the detection part can detect attachment and detachment of the support member disposed on the upper side to and from the tower part; and the rotation drive part rotates the support members on the upper side and/or the lower side around the tower part when the detection part detects the support member that has come off the tower part. This can result in formation of an angle in the planar positional relationship between the upper-level wind turbine part and the lower-level wind turbine part, thereby avoiding the contact between the upper-level blade and the lower-level blade.

In the above invention, the support member may include a connection part connected to the tower part, an elongated member having one end side connected to the connection part and the other end side supporting the wind turbine part, a second coupling member installed on the connection part and provided projecting from the connection part in a direction different from a direction of the elongated member, and a linear second wire member having one end connected to a tip side of the second coupling member and the other end connected to the other end side of the elongated member, and the auxiliary member is configured so as to prevent shaking of the elongated member in a front-rear direction.

With this configuration, the support member is connected to the tower part via the connection part of the support member, one end side of the elongated member is connected to the connection part, and the other end side of the elongated member supports the wind turbine part. The second coupling member is provided projecting from the connection part, and the wire member has one end connected to the tip side of the second coupling member and the other end connected to the other end side of the elongated member, so that the wire member is installed in a direction tilted with respect to the axial direction of the elongated member.

Therefore, concerning a horizontal load that acts on the wind turbine part, the elongated member bears a compressive force, and the wire member bears a pulling force. For example, when the wire member comes off due to being broken or for other reason, the auxiliary member prevents the elongated member from shaking in the front-rear direction.

In the above invention, the auxiliary member may be a linear wire and may include a first auxiliary wire member having one end connected to the second coupling member and the other end connected to the elongated member.

With this configuration, when the wire member comes off due to being broken or for other reason, the other support member and tower part support loads of the support member and the wind turbine part via the first auxiliary wire member being a linear wire.

In the above invention, the auxiliary member may be a linear wire and may include a second auxiliary wire member having one end connected to the connection part and the other end connected to the elongated member, and the second auxiliary wire member is disposed on an opposite side to the first auxiliary wire member with the elongated member taken as a reference.

With this configuration, when the wire member comes off due to being broken or for other reason, the other support member and tower part support loads of the support member and the wind turbine part via the second auxiliary wire member being a linear wire. The second auxiliary wire member is disposed on the opposite side to the first auxiliary wire member with the elongated member taken as a reference, so that it is also possible to support a load in the opposite direction to the direction in which the first auxiliary wire member supports the load of the wind turbine part.

In the above invention, the wind turbine generator may include a guide member provided projecting from the tower part below the support member and having an upper surface tilted to a front or a rear of the wind turbine part.

With this configuration, since the guide member is provided projecting from the tower part below the support member and the upper surface of the guide member is tilted to the front or the rear of the wind turbine part, when the support member falls, the support member collides with the guide member. The upper surface of the guide member is tilted to the front or the rear of the wind turbine part, and hence the support member moves along the tilted upper surface of the guide member. The guide member guides the falling support member in a prescribed direction.

In the above invention, a plurality of levels of the support members may be disposed vertically, the guide member may be provided below each of the support members, and a tilting direction of the upper surface of the guide member disposed on the upper side may be opposite to a tilting direction of the upper surface of the guide member disposed on the lower side.

With this configuration, when both the upper-level and lower-level support members fall, the direction in which the upper-level support member moves along the upper surface of the guide member is opposite to the direction in which the lower-level support member moves along the upper surface of the guide member. It is thus possible to reliably separate the upper-level support member and the lower-level support member in the falling states, and to reduce the possibility of collision of the support member and the wind turbine part on the upper level with the support member and the wind turbine part on the lower level.

In the above invention, the support members may be disposed on both sides across the tower part, the guide member may be provided below each of the support members, and a tilting direction of the upper surface of the guide member disposed on one side may be opposite to a tilting direction of the upper surface of the guide member disposed on the other side being the opposite side across the tower part.

With this configuration, when both the right and left support members fall, the direction in which the one-side support member moves along the upper surface of the guide member is opposite to the direction in which the other-side support member moves along the upper surface of the guide member. It is thus possible to prevent collision of the support member and the wind turbine part on one side with the support member and the wind turbine part on the other side in front of the tower part.

In the above invention, a buffer may be installed on the upper surface of the guide member.

With this configuration, a shocking load that is generated at the time of falling can be reduced to prevent further damage on the support member.

In the above invention, an angle in a lower part of the tilted upper surface of the guide member may be larger than an angle of an upper part of the upper surface.

With this configuration, a falling velocity of the support member can be gradually reduced, and depending on the falling velocity, the movement of the support member can be stopped.

In the above invention, a friction coefficient in a lower part of the tilted upper surface of the guide member may be higher than a friction coefficient in an upper part of the upper surface.

With this configuration, a falling velocity of the support member can be gradually reduced, and depending on the falling velocity, the movement of the support member can be stopped.

In the above invention, the support member may include a connection part connected to the tower part, an elongated member having one end side connected to the connection part and the other end side supporting the wind turbine part, a first coupling member having one end side connected to one end side of the elongated member and the other end side provided above the elongated member, and a linear first wire member having one end connected to the other end side of the first coupling member and the other end connected to the other end side of the elongated member.

With this configuration, the support member is connected to the tower part via the connection part of the support member, one end side of the elongated member is connected to the connection part, and the other end side of the elongated member supports the wind turbine part. One end side of the first coupling member is connected to the one end side of the elongated member, and the other end side of the first coupling member is provided above the elongated member. One end of the wire member is connected to the other end side of the first coupling member, and the other end of the wire member is connected to the other end side of the elongated member, so that the wire member is disposed in a direction tilted with respect to the horizontal direction.

Therefore, concerning a perpendicular load that acts on the wind turbine part, the elongated member bears a compressive force, and the wire member bears a pulling force.

In the above invention, the support member may include a connection part connected to the tower part, an elongated member having one end side connected to the connection part and the other end side supporting the wind turbine part, a second coupling member installed on the connection part and provided projecting from the connection part in a direction different from a direction of the elongated member, and a linear second wire member having one end connected to a tip side of the second coupling member and the other end connected to the other end side of the elongated member.

With this configuration, the support member is connected to the tower part via the connection part of the support member, one end side of the elongated member is connected to the connection part, and the other end side of the elongated member supports the wind turbine part. The second coupling member is provided projecting from the connection part, and the wire member has one end connected to the tip side of the second coupling member and the other end connected to the other end side of the elongated member, so that the wire member is installed in a direction tilted with respect to the axial direction of the elongated member.

Therefore, concerning a horizontal load that acts on the wind turbine part, the elongated member bears a compressive force, and the wire member bears a pulling force.

In the above invention, the wind turbine generator may include a support member turning means capable of turning the support member around the tower part, and a guide member turning means capable of turning the guide member around the tower part so as to follow the support member turned by the support member turning means.

With this configuration, even when the support member turns around the tower part, the guide member can be kept in a position below the support member by the guide member turning means. Therefore, even when the support member turns around the tower part, the guide member can guide the falling support member in the prescribed direction.

In the above invention, the support member may include a connection part connected to the tower part, an elongated member having one end side connected to the connection part and the other end side supporting the wind turbine part, and disposed substantially parallel to a horizontal direction, a first coupling member having one end side connected to the one end side of the elongated member and the other end side provided above the elongated member, and a linear wire member having one end connected to the other end side of the first coupling member and the other end connected to the other end side of the elongated member.

With this configuration, the support member is connected to the tower part via the connection part of the support member, the elongated member is disposed substantially parallel to the horizontal direction, one end side of the elongated member is connected to the connection part, and the other end side of the elongated member supports the wind turbine part. One end side of the first coupling member is connected to the one end side of the elongated member, and the other end side of the first coupling member is provided above the elongated member. One end of the wire member is connected to the other end side of the first coupling member, and the other end of the wire member is connected to the other end side of the elongated member, so that the wire member is disposed in a direction tilted with respect to the horizontal direction.

Therefore, concerning a perpendicular load that acts on the wind turbine part, the elongated member bears a compressive force, and the wire member bears a pulling force.

In the above invention, the support member may include a connection part connected to the tower part, a first elongated member having one end side connected to the connection part and the other end side supporting the wind turbine part, a second elongated member having one end side connected on a side 180° opposite to the first elongated member with respect to the tower part, and the other end supporting the wind turbine part, a second coupling member installed on the connection part and provided projecting from the connection part in a direction in which an angle formed by the first elongated member and the second elongated member is 90°, a linear first wire member having one end connected to a tip side of the second coupling member and the other end connected to the other end side of the first elongated member, and a linear second wire member having one end connected to the tip side of the second coupling member and the other end connected to the other end side of the second elongated member.

With this configuration, the support member is connected to the tower part via the connection part of the support member, one end side of each of the first and second elongated members is connected to the connection part, and the other end side of each of the first and second elongated members supports the wind turbine part. The first and second elongated members are installed on the sides 180° opposite to each other across the tower part and disposed symmetrically.

The second coupling member is installed on the connection part and provided projecting from the connection part in the direction in which the angle formed by the first elongated member and the second elongated member is 90°, and each of the first and second wire members has one end connected to the tip side of the second coupling member and the other end connected to the other end side of the first and second elongated member. Therefore, each of the first and second wire members is installed in the direction tilted with respect to the axial direction of the elongated member.

Therefore, concerning a horizontal load that acts on the wind turbine part, the elongated member bears a compressive force, and the wire member bears a pulling force.

In the above invention, the connection part may be configured to be turnable around the tower part within a horizontal plane.

With this configuration, with the connection part being turnable around the tower part within the horizontal plane, the elongated member connected to the connection part or the wind turbine part supported by each of the first and second elongated members also turns around the tower part within the horizontal plane, and the wind turbine part can thus make a yaw revolution.

In the above invention, the support member may have a truss structure.

In the above invention, the tower part includes a plurality of pillar members and a coupling part rigidly joined with the pillar members.

In the above invention, the pillar member of the tower part may have a streamline-shaped cross section.

### [Advantageous Effects of Invention]

According to the present invention, it is possible to avoid the contact of the support member and the blade of the wind turbine part installed on the support member, with the tower part and the blade of the other wind turbine part when the support member falls.

### [Brief Description of Drawings]

[Fig. 1] Fig. 1 is a front view showing a wind turbine generator according to first and second embodiments of the present invention;
[Fig. 2] Fig. 2 is a front view showing a support member of the wind turbine generator according to the first embodiment of the present invention;
[Fig. 3] Fig. 3 is a plan view showing the support member of the wind turbine generator according to the first embodiment of the present invention;
[Fig. 4] Fig. 4 is a front view showing a modified example of the support member of the wind turbine generator according to the first embodiment of the present invention;
[Fig. 5] Fig. 5 is a longitudinal sectional view showing the modified example of the support member of the wind turbine generator according to the first embodiment of the present invention, as well as an arrow view along a line V-V of Fig. 4;
[Fig. 6] Fig. 6 is a schematic view of a member that bears a perpendicularly generated load among the support members of the wind turbine generator according to the first embodiment of the present invention;
[Fig. 7] Fig. 7 is a schematic view of a member that bears a horizontally generated load among the support members of the wind turbine generator according to the first embodiment of the present invention;
[Fig. 8] Fig. 8 is a front view showing a modified example of the wind turbine generator according to the first embodiment of the present invention;
[Fig. 9] Fig. 9 is a plan view schematically showing a tower part of Fig. 8;
[Fig. 10] Fig. 10 is a front view showing a modified example of the wind turbine generator according to the first embodiment of the present invention;
[Fig. 11] Fig. 11 is a front view showing the modified example of Fig. 10;
[Fig. 12] Fig. 12 is a front view showing a modified example of the wind turbine generator according to the first embodiment of the present invention;
[Fig. 13] Fig. 13 is a front view showing the modified example of Fig. 12;
[Fig. 14] Fig. 14 is a cross sectional view showing a modified example of the tower part of the wind turbine generator according to the first embodiment of the present invention;
[Fig. 15] Fig. 15 is a front view showing a first example of the wind turbine generator according to the second embodiment of the present invention;
[Fig. 16] Fig. 16 is a front view showing the first example of the wind turbine generator according to the second embodiment of the present invention;
[Fig. 17] Fig. 17 is a front view showing the first example of the wind turbine generator according to the second embodiment of the present invention;
[Fig. 18] Fig. 18 is a front view showing the first example of the wind turbine generator according to the second embodiment of the present invention;
[Fig. 19] Fig. 19 is a front view showing the first example of the wind turbine generator according to the second embodiment of the present invention;
[Fig. 20] Fig. 20 is a front view showing the first example of the wind turbine generator according to the second embodiment of the present invention;
[Fig. 21] Fig. 21 is a front view showing the first example of the wind turbine generator according to the second embodiment of the present invention;
[Fig. 22] Fig. 22 is a front view showing a second example of the wind turbine generator according to the second embodiment of the present invention;
[Fig. 23] Fig. 23 is a front view showing a third example of the wind turbine generator according to the second embodiment of the present invention;
[Fig. 24] Fig. 24 is a front view showing a fourth example of the wind turbine generator according to the second embodiment of the present invention;
[Fig. 25] Fig. 25 is a plan view showing a fifth example of the wind turbine generator according to the second embodiment of the present invention;
[Fig. 26] Fig. 26 is a front view showing the fifth example of the wind turbine generator according to the second embodiment of the present invention;
[Fig. 27] Fig. 27 is a plan view showing the fifth example of the wind turbine generator according to the second embodiment of the present invention;
[Fig. 28] Fig. 28 is a front view showing the fifth example of the wind turbine generator according to the second embodiment of the present invention;
[Fig. 29] Fig. 29 is a plan view showing the fifth example of the wind turbine generator according to the second embodiment of the present invention;
[Fig. 30] Fig. 30 is a plan view showing the fifth example of the wind turbine generator according to the second embodiment of the present invention;
[Fig. 31] Fig. 31 is a plan view showing the fifth example of the wind turbine generator according to the second embodiment of the present invention;
[Fig. 32] Fig. 32 is a plan view showing a sixth example of the wind turbine generator according to the second embodiment of the present invention;
[Fig. 33] Fig. 33 is an entire front view showing a wind turbine generator according to a third embodiment of the present invention;
[Fig. 34] Fig. 34 is a front view showing the wind turbine generator according to the third embodiment of the present invention;
[Fig. 35] Fig. 35 is a plan view showing the wind turbine generator according to the third embodiment of the present invention;
[Fig. 36] Fig. 36 is a side view showing the wind turbine generator according to the third embodiment of the present invention;
[Fig. 37] Fig. 37 is a side view showing the wind turbine generator according to the third embodiment of the present invention;
[Fig. 38] Fig. 38 is a plan view showing the wind turbine generator according to the third embodiment of the present invention;
[Fig. 39] Fig. 39 is a side view showing a guide member of the wind turbine generator according to the third embodiment of the present invention, as well as an arrow view along a line A-A of Fig. 38;
[Fig. 40] Fig. 40 is a side view showing the guide member of the wind turbine generator according to one embodiment of the present invention, as well as an arrow view along a line B-B of Fig. 38;
[Fig. 41] Fig. 41 is a plan view showing the wind turbine generator according to the third embodiment of the present invention;
[Fig. 42] Fig. 42 is a side view showing a modified example of the wind turbine generator according to the third embodiment of the present invention;
[Fig. 43] Fig. 43 is a side view showing a modified example of the wind turbine generator according to the third embodiment of the present invention;
[Fig. 44] Fig. 44 is a side view showing a modified example of the guide member of the wind turbine generator according to the third embodiment of the present invention;
[Fig. 45] Fig. 45 is a side view showing a modified example the guide member of the wind turbine generator according to the third embodiment of the present invention; and
[Fig. 46] Fig. 46 is a side view showing a modified example of the guide member of the wind turbine generator according to the third embodiment of the present invention, and a distribution diagram showing distribution of a friction coefficient.

### [Description of Embodiments]

### [First Embodiment]

Hereinafter, a wind turbine generator 1 according to a first embodiment of the present invention will be described with reference to the drawings.

In the multirotor wind turbine generator, a plurality of support members (arms) are provided in the tower part, and the wind turbine part is installed on each support member.

The support member has hitherto been a member having an elongated shape such as a columnar shape or a member having a truss structure formed of a plurality of members in combination. No. WO 2017/108057 discloses that the support member is made up of an elongated member that mainly bears a compressive force and two wire members that bears a compressive force or a pulling force.

In a structure to support a self-weight of the wind turbine part, a wind load to which the wind turbine part is subjected, and the like, when the wire member is connected to the overhead of the tower part so that the tower part bears a perpendicular load as in GE No. 102012020052 above, the structural body of the tower part needs to be made large in view of a compressive force generated in the tower part. Further, in the support structure of GE No. 102012020052, the elongated member also bears a horizontal load, thus making it necessary to strengthen a connection member of the tower part and the support member, which makes the support structure a large-scaled structure.

Moreover, in each of No. WO 2017/108057 and No. WO 2017/008818, the elongated member is disposed obliquely and the wire member is disposed horizontally with respect to the perpendicular load. The smaller the angle of the elongated member with respect to the horizontal direction, the larger compressive force the elongated member bears. Since the elongated member needs to be designed and manufactured strongly enough to bear buckling generated by the compressive force, the cross section of the elongated member is made large, which increases the weight of the member. Furthermore, in No. WO 2017/108057, one of the wires installed on both sides of the tower part is disposed horizontally in front of the tower, and the other of the wires is disposed as tilted on the rear side of the tower. When a horizontal force acts, a compressive force acts on the latter wire, but initial tension acts on the wire due to its self-weight, thus preventing the wire from falling due to tension. However, when an unexpected horizontal load acts, the wire might fall due to tension to make the structure unstable.

The present embodiment has been made in view of such circumstances, and it is an object of the present invention to provide a wind turbine generator capable of reducing a compressive axial force applied to an elongated member that bears a load from a wind turbine part and making the elongated member unlikely to buckle.

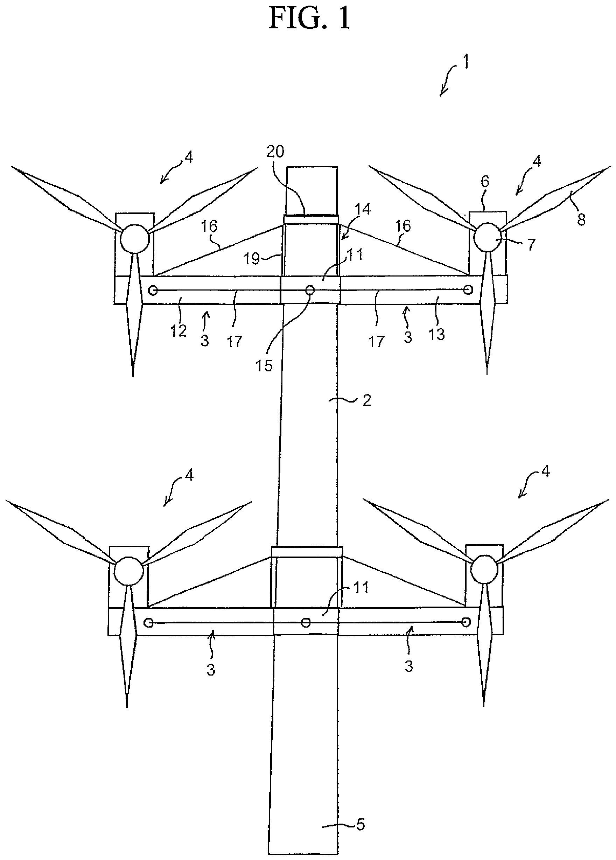

As shown in Fig. 1, the wind turbine generator 1 according to the present embodiment is provided with one tower part 2, a plurality of support members 3 connected to the tower part 2, wind turbine parts 4 installed on the respective support members 3, and the like. The wind turbine generator 1 is interconnected for transmitting generated power to a utility grid, and installed on land or at sea.

The tower part 2 has a structure being long in one direction, and a foundation part 5 of the tower part 2 is provided on the installation surface such that the axial direction is vertical to the installation surface. The tower part 2 may, for example, be one columnar member or be configured by combining a plurality of elongated members.

The support member 3 is, for example, a member being long in one direction. A base part being one end side of the support member 3 is connected to the tower part 2, and the wind turbine part 4 is supported on the tip side being the other end side of the support member 3. When one wind turbine part 4 is installed for one support member 3, the same number of support members 3 as the number of wind turbine parts 4 are connected to the tower part 2. As described later, the support member 3 is made up of a first elongated member 12 and a second elongated member 13 that mainly bear a compressive force, and wire members 16, 17 that bear a pulling force.

The wind turbine part 4 installed on each of the support members 3 includes a nacelle 6, a rotor shaft and a power generator which are accommodated in the nacelle 6, a hub 7 installed at the tip of the rotor shaft, a plurality of (e.g., three) blades 8 provided in the hub 7, and the like.

The nacelle 6 is installed on the top or bottom of the support member 3 and internally has the rotor shaft, a gear box, the power generator, and the like. The hub 7 is provided on one end side of the nacelle 6. The rotor shaft is rotatable around an almost horizontal axial line. One end side of the rotor shaft is connected to the hub 7 and the other end side of the rotor shaft is, for example, connected to the power generator directly, or connected to the power generator via the gear box or a hydraulic pump and a hydraulic pump motor. The power generator is driven by a rotational force generated by rotation of the rotor shaft around the axis, to generate power.

A plurality of blades 8 are radially attached to the hub 7. The plurality of blades 8 rotate about the rotor shaft by receiving the wind. The blade 8 is connected to the hub 7 via a revolution wheel bearing for pitch control, and is turnable around a blade axis extending in the direction of the blade length. Thus, a pitch angle of the plurality of blades 8 is adjusted.

The nacelle 6 revolves on the substantially horizontal plane with respect to the support member 3 so as to orient the hub 7 to the wind direction and make the rotation surface of the blade 8 face the wind direction. The revolution of the nacelle 6 on the substantially horizontal plane is referred to as yaw revolution. The nacelle 6 revolves via the yaw revolution wheel bearing connected to the nacelle 6 and the support member 3 (first yaw revolution).

According to the present embodiment, the plurality of wind turbine parts 4 each include the rotor shaft, the blades 8 provided on the rotor shaft, and the power generator generated by the rotational force of the rotor shaft, and each wind turbine part 4 is supported by the support member 3 connected to the tower part 2. Hence the plurality of wind turbine parts 4 are installed on the tower part 2 via the support member 3. Therefore, each wind turbine part 4 is disposed in an environment (wind condition) on a relatively similar wind condition and rotates and generates power by receiving the wind in the same direction.

Next, the support member 3 according to the present embodiment will be described.

As shown in Figs. 1 to 3, the support member 3 includes a connection part 11, the first elongated member 12, the second elongated member 13, a first coupling member 14, a second coupling member 15, the wire member 16 that bears a pulling force of a perpendicular load, the wire member 17 that bears a pulling force of a horizontal load, a tension adjustment mechanism 18, and the like.

The connection part 11 is provided around the tower part 2 and connected to the tower part 2. The connection part 11 has a ring shape, for example. The support member 3 is connected to the tower part 2 via the connection part 11 of the support member 3. The tower part 2 is subjected to a load transmitted from the support member 3 only via the connection part 11, and the other portion of the tower part 2 is not subjected to the load transmitted from the support member 3. In addition, the connection part 11 is configured to be turnable around the tower part 2 within the substantially horizontal plane in preparation for a bearing structure (support member turning means).

Accordingly, the connection part 11 is thus turnable around the tower part 2 within the substantially horizontal plane. Therefore, the wind turbine part 4 supported by each of the first elongated member 12 and the second elongated member 13 which are connected to the connection part 11 turns around the tower part 2 within the substantially horizontal plane, and the wind turbine part 4 can thus make a yaw revolution (second yaw revolution).

The yaw revolution of the wind turbine part 4 may be made by the nacelle 6 revolving on the substantially horizontal plane with respect to the support member 3 (first yaw revolution), or may be made by the connection part 11 of the support member 3 revolving within the substantially horizontal plane with respect to the tower part 2 (second yaw revolution). In the present embodiment, the case has been described where the wind turbine part 4 is configured to be able to make both the first yaw revolution and the second yaw revolution. However, the present invention is not limited to this example, but the wind turbine part 4 may be configured to be able to make only one of the first yaw revolution and the second yaw revolution.

The first elongated member 12 is connected to the connection part 11 on one end (base end) side and supports the wind turbine part 4 on the other end (tip) side. The second elongated member 13 is connected on one end (base end) side being 180° opposite to the first elongated member 12 with respect to the tower part 2, and supports the wind turbine part 4 on the other end (tip) side. The first elongated member 12 and the second elongated member 13 are disposed substantially parallel to the horizontal direction.

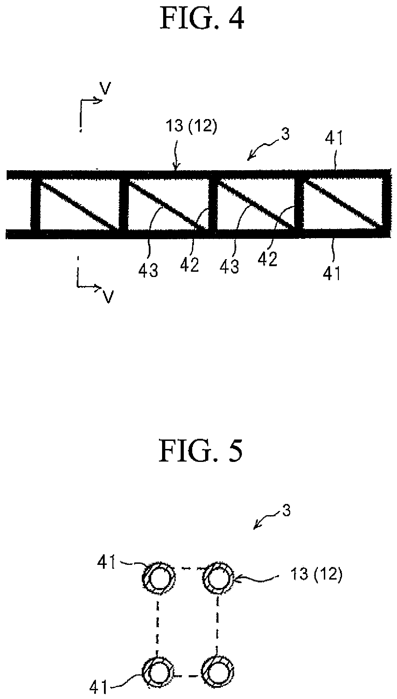

Each of the first elongated member 12 and the second elongated member 13 may be an elongated member having a columnar shape or other shape, or may be a member having a truss structure formed of a plurality of members in combination. When the first elongated member 12 and the second elongated member 13 each have the truss structure, the plurality of members (e.g., mold steel) satisfy required sectional performance. As shown in Figs. 4 and 5, the first elongated member 12 or the second elongated member 13 having the truss structure is made up of, for example, four tubular horizontal members 41, vertical members 42 each coupling between the horizontal members 41, diagonal members 43 each coupling between the horizontal member 41 and/or the vertical member 42, and the like. This enables reduction in weight as compared to a case where the first elongated member 12 or the second elongated member 13 is made up of one cylindrical tube member or square tube member. Further, by the truss structure being made up of the plurality of members, each member has a short buckling length, and buckling hardly occurs in the first elongated member 12 and the second elongated member 13.

The one end (lower end) side of the first coupling member 14 is connected in the vicinity of one end side of the first elongated member 12 or the second elongated member 13, and the other end (upper end) side of the first coupling member 14 is provided above the first elongated member 12 or the second elongated member 13. The first coupling member 14 is, for example, a tubular member 19, and the tubular member 19 is installed along the outer peripheral surface of the tower part 2 such that its axial direction is a direction parallel to or tilted with respect to the axial direction of the tower part 2.

The first coupling member 14 may include a connection member 20 connected to the upper end of the tubular member 19 described above. The connection member 20 is disposed so as to surround the tower part 2, for example, and has a ring shape. The tubular members 19 are coupled to each other via the connection member 20. In addition, the tension adjustment mechanism 18 capable of adjusting the tension of the wire member 16 is installed on the top of the first coupling member 14.

The second coupling member 15 is installed on the connection part 11 and provided projecting from the connection part 11 in a direction in which an angle formed with respect to each of the first elongated member 12 and the second elongated member 13 is 90° and on the window receiving side. That is, the second coupling member 15 is provided projecting from the connection part 11 so as to be on the same side as the side where the blade 8 of the wind turbine part 4 receives the wind.

The wire member 16 is a linear member, one end of the wire member 16 is connected to the other end (upper end) side of the first coupling member 14, and the other end of the wire member 16 is connected to the other end side of the first elongated member 12 or the second elongated member 13. Hence the wire member 16 is installed in a tilting direction with respect to the horizontal direction.

The wire member 17 is a linear member, one end of the wire member 17 is connected to the tip side of the second coupling member 15, and the other end of the wire member 17 is connected to the other end of the first elongated member 12 or the second elongated member 13. Hence the wire member 17 is installed in a tilting direction with respect to the axial direction of the first elongated member 12 or the second elongated member 13. Note that the wire member 17 is an example of the first wire member and the second wire member.

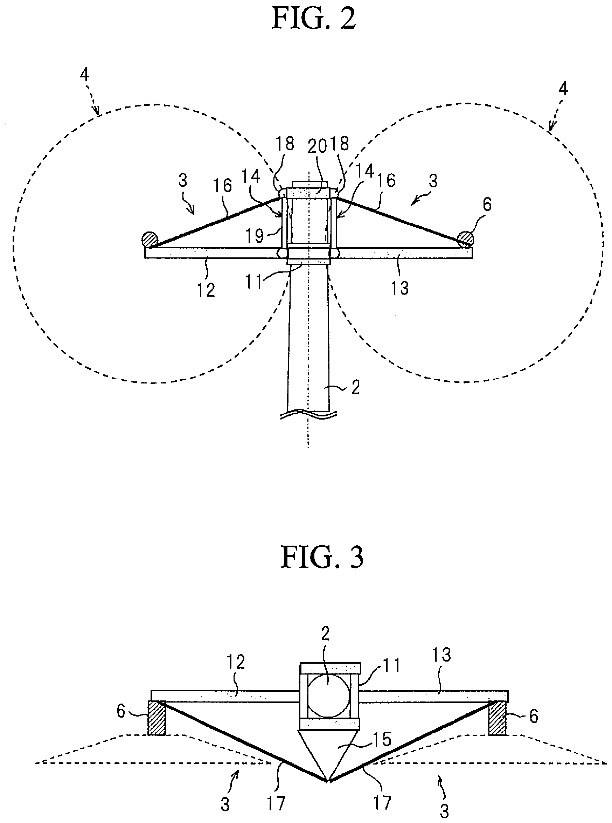

Next, a description will be given of the configuration in which the support member 3 bears a perpendicularly generated load. As shown in Figs. 1 and 2, the support member 3 bears a perpendicularly generated load by the connection part 11, the first elongated member 12, the second elongated member 13, the first coupling member 14, and the wire member 16 described above. The constituents are connected to each other basically by pin coupling.

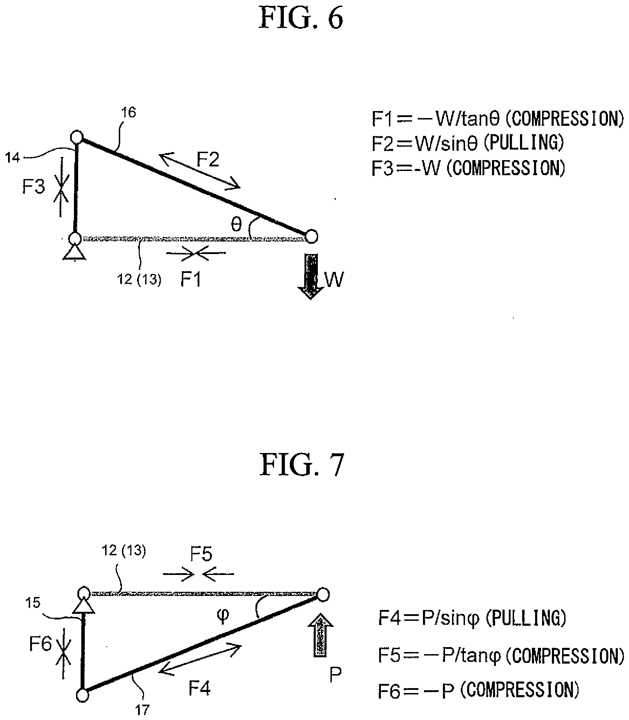

As shown in Fig. 6, the first elongated member 12 and the second elongated member 13 resist by axial compression against a perpendicularly generated load, such as a self-weight of the wind turbine part 4, and bears a compressive force. The wire member 16 resists by axial pulling against the perpendicular load and bears a pulling force. Note that Fig. 6 shows a case where an angle formed by the first elongated member 12 or the second elongated member 13 and the wire member 17 is ϕ.

Hence in the present embodiment, unlike a case where no wire member is provided and only the elongated member bears the perpendicularly generated load by the bending of the member, the first elongated member 12, the second elongated member 13, and the wire member 16 bear the load by axial forces of the members, thus enabling reduction in structural weight.

Further, concerning the perpendicular load, as compared to the case where the elongated member is disposed obliquely and the wire member is disposed horizontally as in the configuration disclosed in each of No. WO 2017/108057 and No. WO 2017/008818 above, in the present embodiment, the wire member 16 suspended from above can be caused to bear even a larger amount of axial force, to reduce a compressive axial force that acts on each of the first elongated member 12 and the second elongated member 13. Moreover, since the first elongated member 12 and the second elongated member 13 are disposed in the substantially horizontal direction, the first elongated member 12 or the second elongated member 13 may be made shorter than that in the case of the elongated member being disposed obliquely when the distance from the tower part 2 to the wind turbine part 4 is assumed to be the same. As a result, the buckling length is reduced to make the buckling hardly occur. Consequently, in the present embodiment, the required sectional area of each of the first elongated member 12 and the second elongated member 13 can be reduced and the weight thereof can thus be reduced.

Further, the support member 3 according to the present embodiment is configured to complete, only by itself, the force flow of the perpendicularly generated load without burdening the tower part 2 with the load. That is, the first elongated member 12 or the second elongated member 13 and the wire member 16 are connected to the first coupling member 14, and the first coupling member 14 bears the compressive force. Therefore, unlike the case where the wire member is connected to the overhead of the tower part so that the tower part bears a perpendicular load as in GE No. 102012020052, the tower part 2 can be reduced in weight since its structural body need not be increased for the load the tower part 2 would bear. Moreover, the support members 3 can be successively provided on a plurality of levels in the height direction of the tower part 2 as long as the configuration satisfies structural design.

Next, a description will be given of a configuration in which the support member 3 bears a horizontally generated load (e.g., a thrust force generated by the wind turbine part 4 receiving the wind). As shown in Figs. 1 and 3, the support member 3 bears a horizontally generated load by the connection part 11, the first elongated member 12, the second elongated member 13, the second coupling member 15, and the wire member 17 described above. The constituents are connected to each other by pin coupling.

As shown in Fig. 7, the first elongated member 12 and the second elongated member 13 resist by axial compression against a horizontally generated load, such as a wind load to which the wind turbine part 4 is subjected from the wind, and bears a compressive force. The wire member 17 resists by axial pulling against the horizontal load and bears a pulling force. Note that Fig. 7 shows a case where an angle formed by the first elongated member 12 or the second elongated member 13 and the wire member 17 is ϕ.

Hence in the present embodiment, unlike a case where no wire member is provided and only the elongated member bears the horizontally generated load by bending of the member, the first elongated member 12, the second elongated member 13, and the wire member 17 bear the load by axial forces of the members, so that it is possible to simplify the cross section of the member and reduce the structural weight.

Further, concerning the horizontal load, as compared to the case where the elongated member is disposed obliquely and the wire member is disposed in a straight line as in the configuration disclosed in No. WO 2017/108057 above, in the present embodiment, the obliquely disposed wire member 17 can be caused to bear even a larger amount of pulling axial force, to reduce a compressive axial force that acts on each of the first elongated member 12 and the second elongated member 13. Moreover, since the first elongated member 12 and the second elongated member 13 are disposed in a substantially straight line, the length of the first elongated member 12 or the second elongated member 13 may be made shorter than that in the case of the elongated member being disposed obliquely when the distance from the tower part 2 to the wind turbine part 4 is assumed to be the same. As a result, the buckling length is reduced to make the buckling hardly occur. Consequently, in the present embodiment, the required sectional area of each of the first elongated member 12 and the second elongated member 13 can be reduced and the weight thereof can thus be reduced.

Further, the support member 3 according to the present embodiment is configured to complete only by itself the force flow of the horizontally generated load without burdening the tower part 2 with the load. That is, the first elongated member 12 or the second elongated member 13 and the wire member 17 are connected to the second coupling member 15, and the second coupling member 15 bears the compressive force. Therefore, unlike the case as in GE No. 102012020052 where the elongated member is connected to the tower part so that the tower part bears the horizontal load, there is no need to strengthen the connection part 11 connecting between the tower part 2 and the first elongated member 12 or the second elongated member 13 for the load the tower part 2 would bear, and it is possible to simplify the connection structure with the tower part 2. Moreover, the support members 3 can be successively provided on a plurality of levels in the height direction of the tower part 2 as long as the configuration satisfies structural design.

Next, the tower part 2 according to the present embodiment will be described. As described above, the tower part 2 may, for example, be one columnar member or be configured by combining a plurality of elongated members.

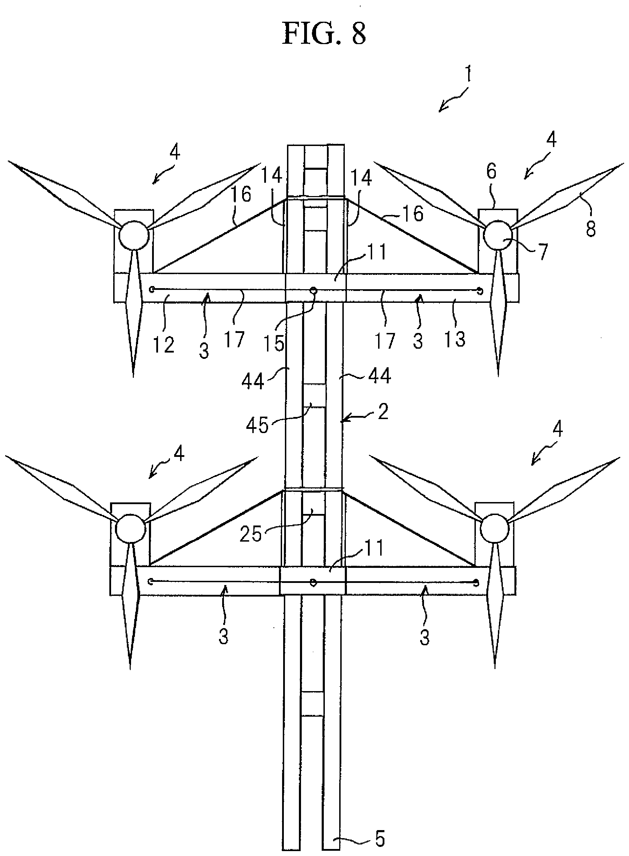

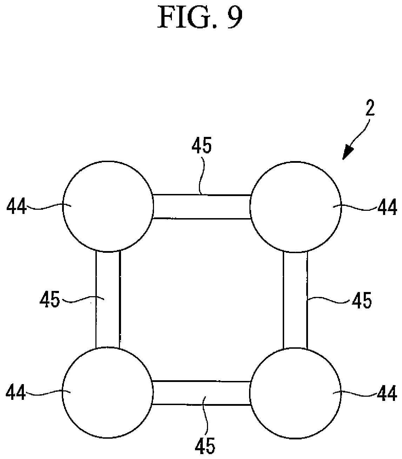

In the following, with reference to Figs. 8 and 9, a description will further be given of the tower part 2 configured by combining a plurality of long pillar members.

As shown in Fig. 9, the tower part 2 includes four pillar members 44 and coupling parts 45 coupling the four pillar members 44 at substantially the same height position. The four pillar members 44 each extend in a substantially vertical direction. Further, the four pillar members 44 are arranged so as to be located at respective vertexes of a square in a plan view. That is, each pillar member 44 is arranged so as to be spaced equally from the adjacent pillar member 44.

The coupling part 45 is installed between the adjacent pillar members 44 and rigidly joined with the pillar member 44. The coupling parts 45 each extend in the substantially horizontal direction and couples the adjacent pillar members. That is, the coupling parts 45 are arranged on respective side portions of the square in a plan view.

A plurality of coupling parts 45 are provided along a longitudinal direction (i.e. height direction) of the pillar member 44. The plurality of coupling parts 45 are arranged at predetermined intervals over the substantially entire longitudinal portion of the pillar member 44.

As thus described, the tower part 2 is a so-called multicolumn made up of the plurality of pillar members 44 and coupling parts 45. Since the coupling parts 45 rigidly joined with the pillar members 44 are installed, the tower part 2 is formed by a so-called rigid frame structure made up of the pillar members 44 and the coupling parts 45. Thus, when a load acts on the tower part 2, the plurality of pillar members 44 unitedly resists against bending behavior of the tower part 2. It is thus possible to enhance the rigidity of the tower part 2.

Further, in the wind turbine generator 1, an unexpected load may act in an installation environment or the like. When the tower part 2 is formed by the truss structure, if an unexpected load acts on the tower part 2, buckling deformation may occur in a brace of the truss structure to make the structure of the tower part 2 unstable. In the present embodiment, the tower part 2 is formed by the rigid frame structure made up of the pillar members 44 and the coupling parts 45, which is a relatively simple structure, so that even with the unexpected load acting on the tower part 2, unstable behavior as in the truss does not occur, but stable deformation behavior can be obtained.

Moreover, since the tower part 2 has enhanced rigidity by being formed by the rigid frame structure made up of the plurality of pillar members 44 and coupling parts 45, the tower part 2 can be reduced in weight as compared to the structure in which equivalent rigidity is obtained only by one pillar member.

The number of the pillar members 44 and the number of coupling parts 45 are not limited to four. For example, the tower part 2 may be made up of six pillar members and six coupling parts. In this case, in a plan view, the pillar members are arranged so as to be located at respective vertexes of a regular hexagon, and the coupling parts are arranged on respective lines of the regular hexagon.

Moreover, since the lower end portion of the tower part 2 is usually buried in the ground in the wind turbine generator 1, at the time of installing the wind turbine generator 1, a large pit is formed in the ground in a size large enough for the lower portion of the tower part 2 to be buried. When the tower part 2 is made up of one pillar member, it is necessary to drill in the ground a pit with a large diameter where an external shape of the one pillar member can be buried, which may cause an increase in cost at the time of drilling. In the present embodiment, with the tower part 2 being made up of the plurality of pillar members 44, the diameter of each pillar member 44 is smaller than that in the structure in which equivalent rigidity is obtained only by one pillar member. Accordingly, the pit in which the pillar member 44 is buried can also be made small to reduce a drilling amount at the time of installing the pillar member 44, so that it is possible to simplify the drilling operation and reduce cost at the time of drilling. It is thereby possible to simplify the operation at the time of installing the wind turbine generator 1 and reduce the cost of the installation.

In the present embodiment, the entire tower part 2 has been configured to be a multicolumn, but the present invention is not limited thereto. For example, only a base part of the tower part 2 where a large bending load applies may be formed to be a multicolumn. In addition, the number of pillar members 44 or the number of coupling parts 45 installed is not limited to the example described above, but another configuration may be formed.

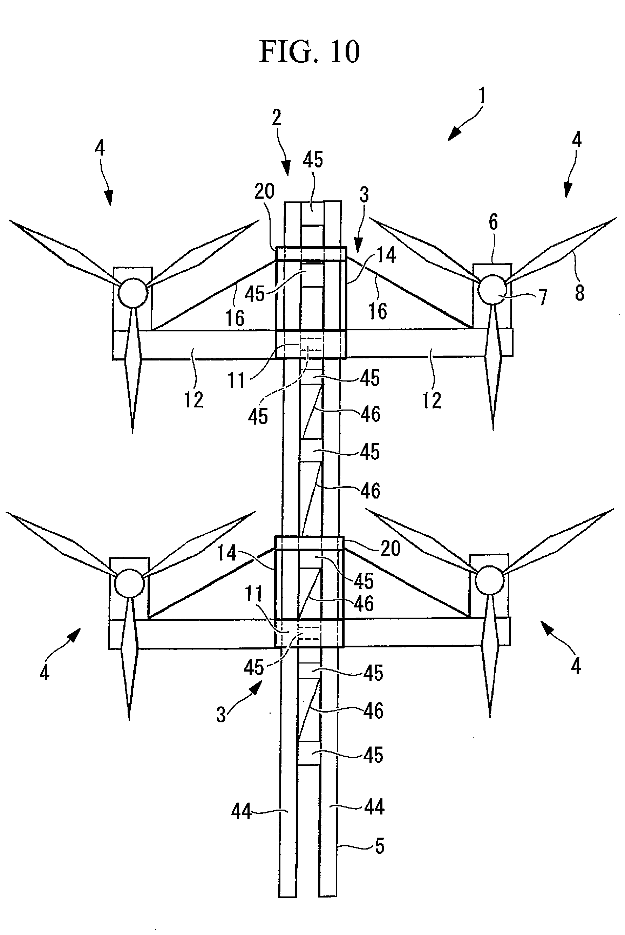

Further, the tower part 2 includes a viscous damper (first damper) 46 as shown in Fig. 10. The viscous damper 46 is, for example, an oil damper. The viscous damper 46 is disposed obliquely in a space formed by the pillar members 44 and the coupling parts 45 of the multicolumn type tower part 2. Specifically, the viscous damper 46 is disposed in a rectangular space with the sides defined by the pillar members 44 and the above and below defined by the coupling parts 45. One end of the viscous damper 46 is connected to the vicinity of the coupling portion of one pillar member 44 and one coupling part 45. The other end of the viscous damper 46 is connected to the vicinity of the coupling portion of the other pillar member 44 (i.e., the pillar member 44 except the one pillar member 44) and the other coupling part 45 (i.e., the coupling part 45 except the one coupling part 45). That is, the viscous damper 46 is disposed diagonally in the rectangular space. The one end and the other end of the viscous damper 46 may be connected to one of the pillar member 44 and the coupling part 45. In Fig. 10, a plurality of viscous dampers 15 are provided.

As thus described, the tower part 2 includes the viscous damper 46 coupling between one pillar member 44 or the one coupling part 45 and the other pillar member 44 or the coupling part 45. This enables an increase in structural damping of the tower part 2. That is, when an external force of the wind, an earthquake, or the like is input into the tower part 2 and the tower part 2 vibrates, shearing or bending deformation occurs in the tower part 2. In the present embodiment, when the tower part 2 vibrates, the viscous damper 46 is deformed to add damping. This can reduce the vibration of the tower part 2. Since the structural damping can be increased, it is possible to prevent occurrence of vortex-induced vibration and the like in the tower part 2. Since the viscous damper 46 not having rigidity has been adopted, the buckling deformation or the like does not occur in the damper, and the structure of the tower part 2 can thus be made stable.

Note that the damper to be applied is not limited to the above damper. For example, a viscoelastic damper may be used. Alternatively, for example, a steel member damper using elastoplastic properties of the steel member, a friction damper, a Bingham damper using a Bingham fluid, or other damper may be used instead of the viscous damper 46. By using these dampers, larger damping can be added, thereby increasing an earthquake response reduction effect on the earthquake.

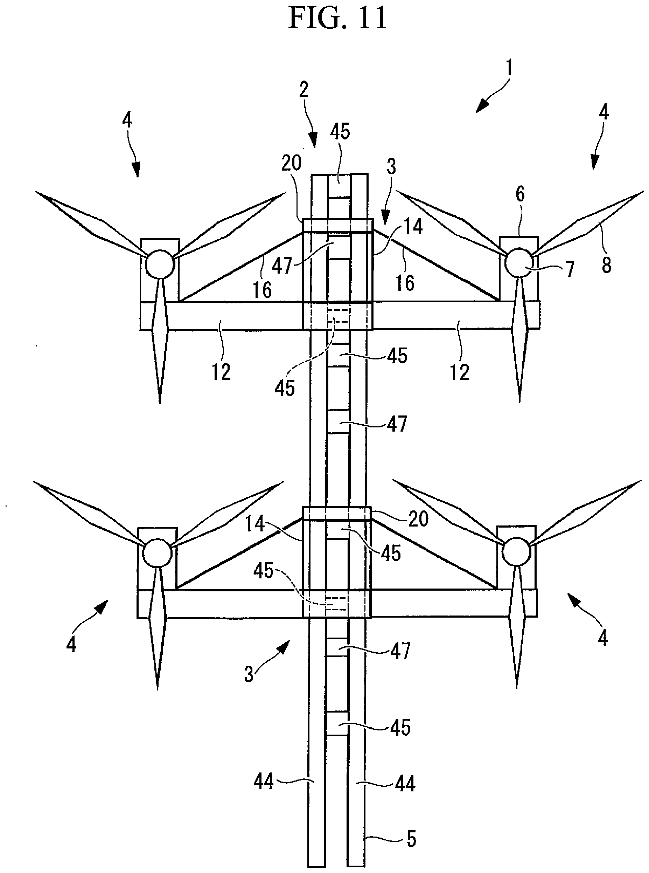

Alternatively, as shown in Fig. 11, instead of the obliquely disposed viscous damper 46, a damping mechanism (first damper) 47 is provided which can add damping to shearing deformation so as to couple the pillar member 44 with an adjacent pillar member 45 . In the example shown in Fig. 11, a plurality of damping mechanisms 47 are provided. By providing such damping mechanisms 47, a similar effect to that of the obliquely disposed viscous damper 46 can be obtained. Note that the tower part 2 may have a structure with the damping mechanism 47 and the obliquely disposed viscous damper 46 described above in combination.

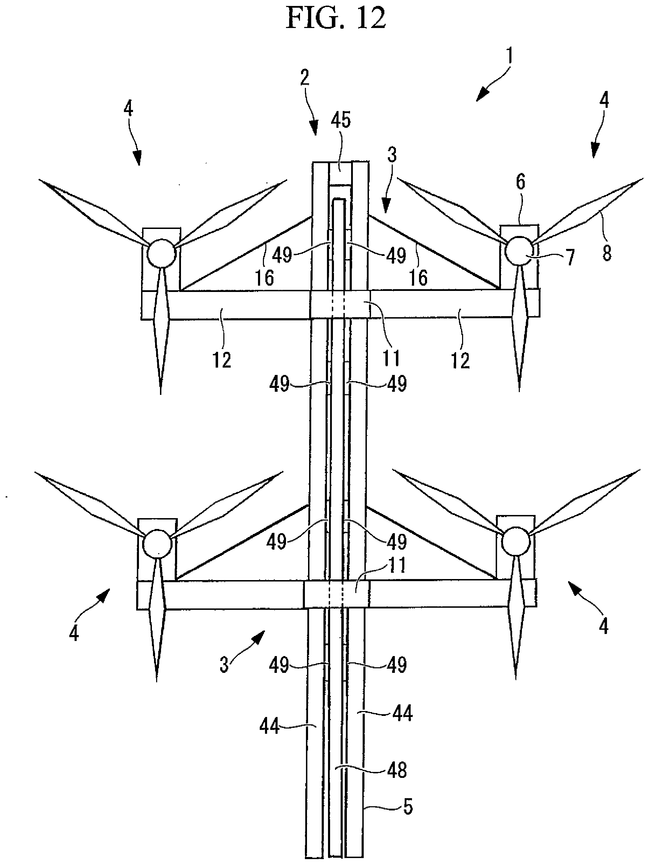

Alternatively, as shown in Fig. 12, the tower part 2 includes an inner column 48 surrounded by four pillar members 44 and disposed away from the four pillar members 44, and a damping part (second damper) 49 provided between the pillar member 44 or the coupling part 45 and the inner column 48. The inner column 48 is disposed in the vicinity of the center part of the pillar members 44 arranged at vertexes of a square in a plan view. The inner column 48 is independently raised and formed to have substantially the same height as that of the pillar member 44. A natural period of the inner column 48 is set to be a natural period different from a natural period of the configuration made up of the plurality of pillar members 44 and the plurality of coupling parts 45. Note that the natural period of the inner column 48 may be set to the natural period of the inner column 48 itself or may be set by adjusting the natural period by installing a spring element (not shown) linking between the inner column 48 and the pillar member 44 or the coupling part 45. The damping part 49 is provided so as to be in contact with the outer peripheral surface of the pillar member 44 or the coupling part 45 and the outer peripheral surface of the inner column 48. In the present embodiment, a plurality of (four) damping parts 49 are provided.

In the tower part 2 shown in Fig. 12, the inner column 48 surrounded by the four pillar members 44 and disposed away from the four pillar members 44 is disposed, and the damping part 49 is provided between the pillar member 44 or the coupling part 45 and the inner column 48. Further, the natural period of the inner column 48 and the natural period of the structural matter made up of the pillar members 44 and the like are set to be detuned from each other. Thus, when the tower part 2 vibrates, relative displacement occurs between the structural matter made up of the pillar members 44 and the inner column 48. When the relative displacement occurs, the damping part 49 provided between the pillar member 44 or the coupling part 45 and the inner column 48 is pushed or pulled. When the damping part 49 is pushed or pulled, the damping part 49 is deformed, and damping is added due to this deformation. This can reduce the vibration of the tower part 2. It is thus possible to improve the wind resistance and the earthquake resistance of the wind turbine generator 1. Further, since the inner column 48 is disposed as surrounded by the four pillar members 44, it is possible to reduce the size of the tower part 2 and simplifies its outer shape as compared to a case where the inner column 48 is provided outside the plurality of pillar members 44.

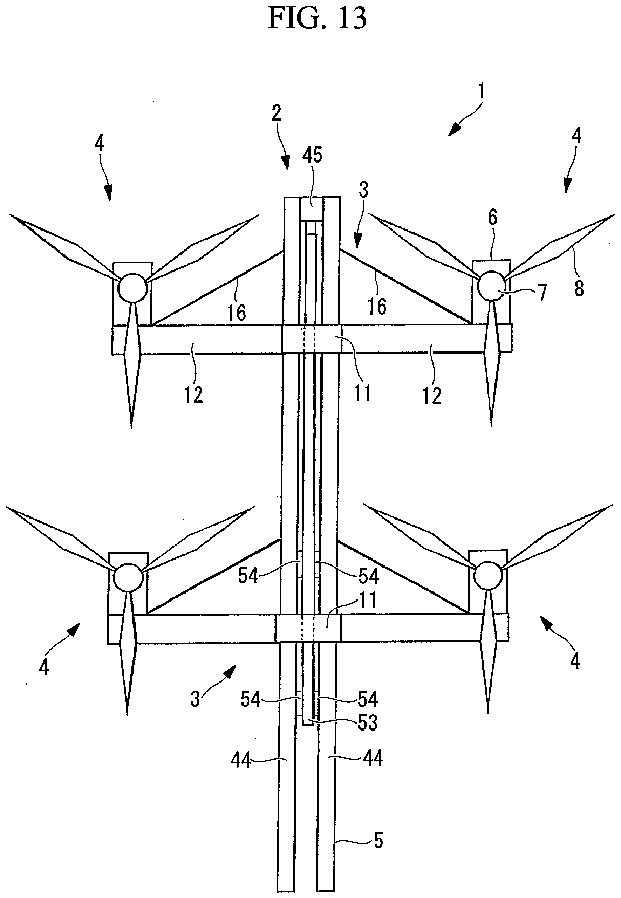

Alternatively, as shown in Fig. 13, the tower part 2 includes a suspension member 53 surrounded by four pillar members 44 and disposed away from the four pillar members 44, and a damping part (second damper) 54 provided between the pillar member 44 and the suspension member 53. The suspension member 53 is a columnar or cylindrical member suspended from the coupling part 45 disposed at the top. A natural period of the suspension member 53 is set to be a natural period substantially the same as the natural period of the configuration made up of the plurality of pillar members 44 and the plurality of coupling parts 45. Note that the natural period of the suspension member 53 may be set to a natural period of the suspension member 53 itself or may be set by adjusting the natural period by installing a spring element (not shown) linking between the suspension member 53 and the pillar member 44 or the coupling part 45. Further, the suspension member 53 is formed to have a predetermined weight. The predetermined weight is a weight to such an extent that a response reduction effect, described later, is exerted. The suspension member 53 may be suspended from the pillar member 44. The damping part 54 is provided so as to be in contact with the outer peripheral surface of the pillar member 44 and the outer peripheral surface of the suspension member 53. In Fig. 13, a plurality of (two) damping parts 54 are provided.

In the tower part 2 shown in Fig. 13, the suspension member 53 is suspended from the pillar member 44, and the damping part 54 is provided between the pillar member 44 and the suspension member 53. Further, the natural period of the suspension member 53 is set to be substantially the same as the natural period of the pillar member 44 so that the suspension member 53 resonates with the tower part 2. Thus, when the tower part 2 vibrates, the pillar member 44 vibrates, and the suspension member 53 thereby resonates. When the suspension member 53 resonates, the suspension member 53 serves as a turned mass damper (TMD) to improve damping performance of the structure as a whole, so that the vibration of the tower part 2 can be reduced. It is thus possible to improve the wind resistance and the earthquake resistance of the wind turbine generator. Further, since the suspension member 53 is disposed as surrounded by the plurality of pillar members 44, it is possible to reduce the size of the tower part 2 and simplifies its outer shape as compared to a case where the suspension member 53 is provided outside the plurality of pillar members 44.

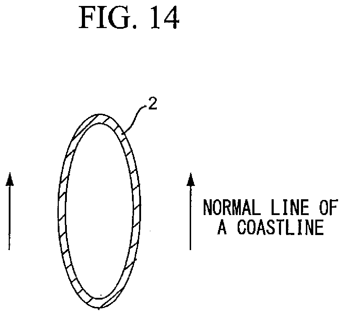

Alternatively, as shown in Fig. 14, the pillar member constituting the tower part 2 is not limited to the case where the pillar member has a circular cross section, but may have a streamline-shaped cross section. Especially when the wind turbine generator 1 is installed at sea, a load to which the wind turbine generator 1 is subjected from the sea wave or the tidal wave can be reduced. The tower part 2 having a streamline shape is, for example, disposed such that the longitudinal direction of the streamline-shaped cross section is parallel to the traveling direction of the wave (a normal line of a coastline). This leads to reduction in resistive force of the tower part 2 against the sea wave or the tidal wave. The present embodiment is applicable to both the case where the tower part 2 is made up of one pillar member and the case where the tower part 2 is made up of a plurality of pillar members in combination.

### [Second Embodiment]

Hereinafter, a wind turbine generator 1 according to a second embodiment of the present invention will be described with reference to the drawings.

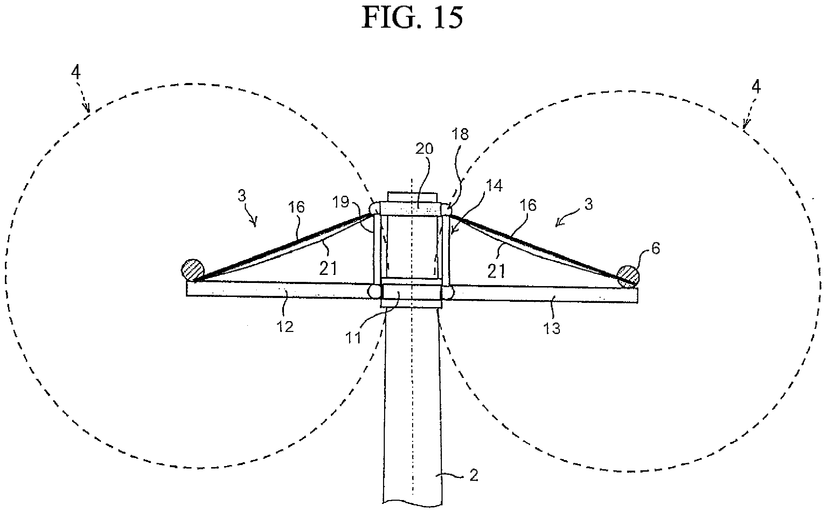

As shown in Fig. 1, the wind turbine generator 1 according to the present embodiment is provided with one tower part 2, a plurality of support members 3 connected to the tower part 2, wind turbine parts 4 installed on the respective support members 3, and the like. The wind turbine generator 1 is interconnected for transmitting generated power to a utility grid, and installed on land or at sea. Further, as shown in Fig. 15 and the subsequent drawings, the wind turbine generator 1 according to the present embodiment is provided with an auxiliary member, such as a backup wire 21, which prevents the falling of the support member 3 or the shaking thereof in the front-rear direction when the support member 3 comes off the tower part 2.

In the present embodiment, a case has been described where the angle formed by the first elongated member 12 and the second elongated member 13 is 180°, but the present invention is not limited to this example. The first elongated member 12 and the second elongated member 13 may be provided such that the angle formed by the first elongated member 12 and the second elongated member 13 is smaller than 180° on the side where the blade 8 of the wind turbine part 4 receives the wind.

Further, in the present invention, a case has been described where the first elongated member 12 and the second elongated member 13 are disposed substantially parallel to the horizontal direction, but the present invention is not limited to this example. For example, the axial direction of each of the first elongated member 12 and the second elongated member 13 may be provided obliquely such that the tip side of each of the first elongated member 12 and the second elongated member 13 is located at a higher position than the base end side thereof.

Unlike the first embodiment, the present embodiment further includes the auxiliary member (backup member). In the following, the description of the constituent elements overlapping those in the first embodiment will be omitted.

### <Auxiliary member (Backup member)>

Next, the auxiliary member (backup member) provided in the wind turbine generator 1 of the present embodiment will be described. The auxiliary member prevents the falling or the longitudinal shaking of the support member 3 when the support member 3 becomes unable to normally support the wind turbine part 4.

First, with reference to Figs. 15 to 24, a description will be given of an auxiliary member that is applied in a state where the support member 3 has become unable to support the wind turbine part 4 and the support member 3 might fall.

The support member 3 becomes unable to support the wind turbine part 4 and the support member 3 might fall when, for example, the above-mentioned wire member 16 which bears the perpendicular load by a pulling force is broken. In this case, since the first coupling member 14 and the first elongated member 12 or the second elongated member 13 are connected to each other by pin coupling, the first elongated member 12 or the second elongated member 13 turns about the pin coupling portion as a fulcrum, and the tip side falls downward.

### [First Example]

The backup wire 21 shown in each of Figs. 15 to 21 is an example of the auxiliary member. One end of the backup wire 21 is connected to the first coupling member 14 in the vicinity of the upper end side thereof above the first elongated member 12 or the second elongated member 13, and the other end of the backup wire 21 is connected to the tip side of each of the first elongated member 12 or the second elongated member 13.

With the wind turbine generator 1 in the normal state, the backup wire 21 is installed such that tension is not added thereto. For example, as shown in Fig. 15, the backup wire 21 is installed in the state of being warped along the wire member 16. A support point at each end of the backup wire 21 is the same as or in the vicinity of the support point of the wire member 16. In this case, the backup wire 21 is longer than the wire member 16 so that tension is not added.

The backup wire 21 has elements (e.g., wire diameter, wire type) with which predetermined tension can be transmitted when the wire member 16 is broken. In the state where the support member 3 has become unable to support the wind turbine part 4 and the support member 3 might fall, the backup wire 21 supports the loads of the support member 3 and the wind turbine part 4 on the basis of the other support member 3 and the tower part 2, to prevent the falling.

The backup wire 21 may be fastened with a clip or the like on the wire member 16 at the intermediate point. In this case, the backup wire 21 is fastened such that tension is not transmitted to the wire member 16. This enables reduction in width of shaking of the backup wire 21 due to the wind or the like.

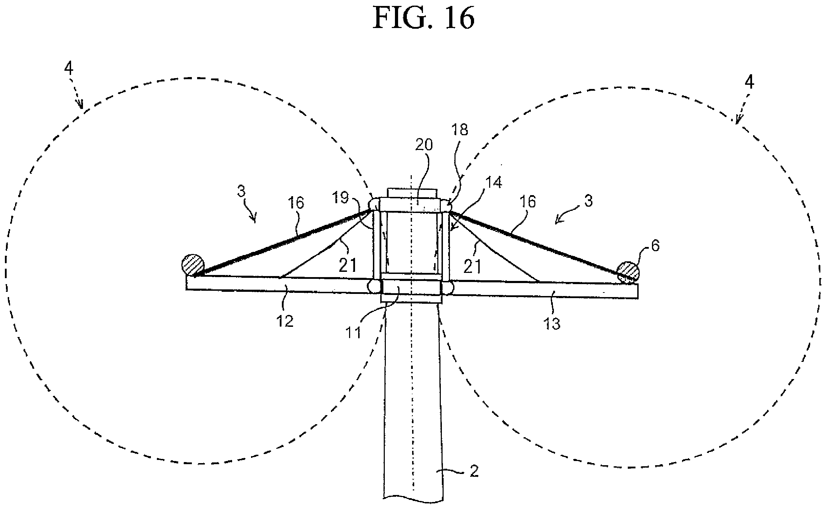

Further, the backup wire 21 is not limited to the case where the backup wires 21 is installed along the wire member 16, but may be provided in a position different from the wire member 16 as shown in Figs. 16 to 21. When the backup wire 21 is installed along the wire member 16, in a state where the wire member 16 is broken by an external factor such as some flying object, the backup wire 21 installed along the wire member 16 might be broken simultaneously. By the backup wire 21 being installed in a position different from the wire member 16, it is possible to reduce the risk of simultaneous damage on the wire member 16 and the backup wire 21.

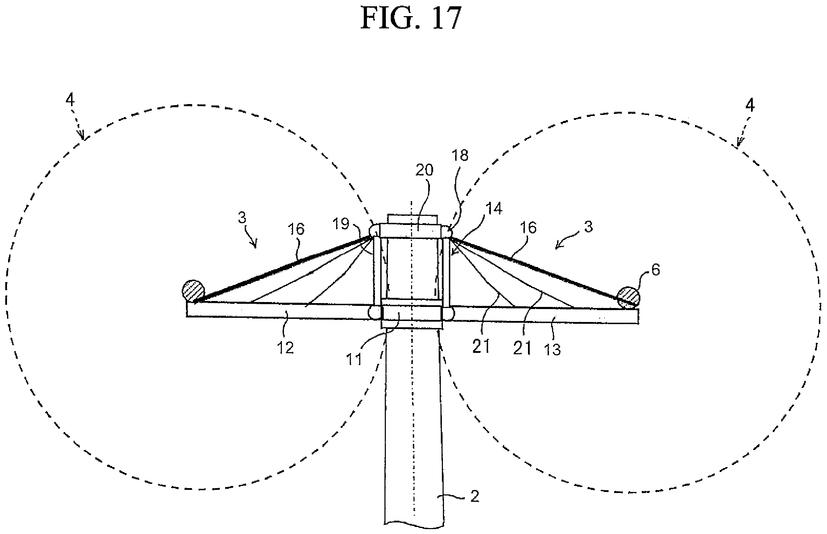

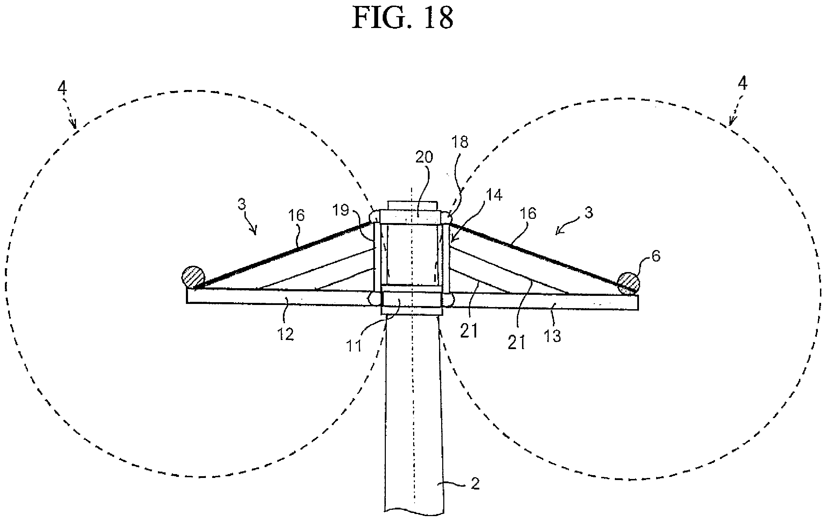

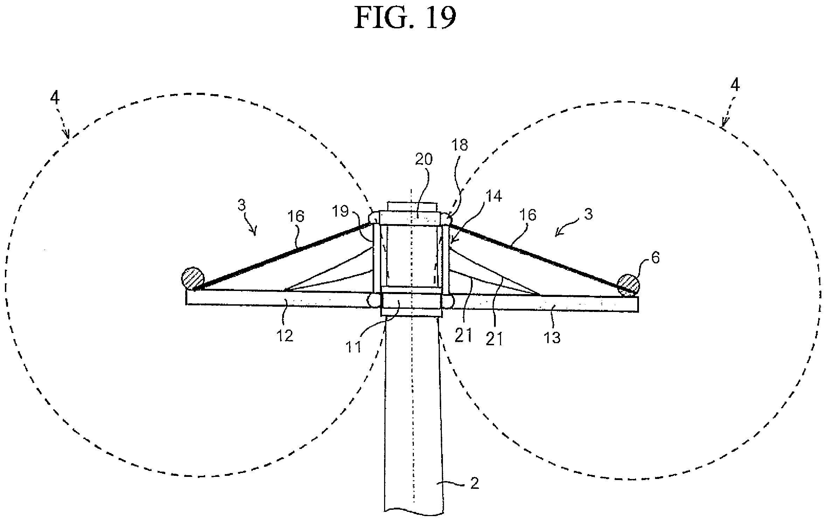

For example, as shown in Figs. 16 and 17, one end of the backup wire 21 is connected to the first coupling member 14 in the vicinity of the upper end side thereof above the first elongated member 12 or the second elongated member 13, and the other end of the backup wire 21 is connected to the intermediate part of the first elongated member 12 or the intermediate part of the second elongated member 13. Alternatively, as shown in Figs. 18 and 19, one end of the backup wire 21 is connected to the intermediate part of the first coupling member 14 above the first elongated member 12 or the second elongated member 13, and the other end of the backup wire 21 is connected to the intermediate part of the first elongated member 12 or the intermediate part of the second elongated member 13.

Only one backup wire 21 may be installed on the first elongated member 12 or the second elongated member 13 as shown in Fig. 16, or two or more backup wires 21 may be installed thereon as shown in Figs. 17 to 19. In a case where a plurality of backup wires 21 are installed, the ends of the plurality of backup wires 21 may be fixed at the same position or in the vicinity (cf. Figs. 17 and 19), or may be fixed at different positions (cf. Figs. 17 to 19).

As described above, since the support member 3 according to the present embodiment is connected to the tower part 2 via the connection part 11, as shown in Figs. 15 to 19, the support point on one end side of the backup wire 21 can be set in the first coupling member 14 and in the vicinity of the upper end side of the first coupling member 14. Although not shown, in the case of connecting the backup wire 21 to the intermediate part of the first coupling member 14, needless to say, an enforcement member or the like is installed in the first coupling member 14 according to a required load.

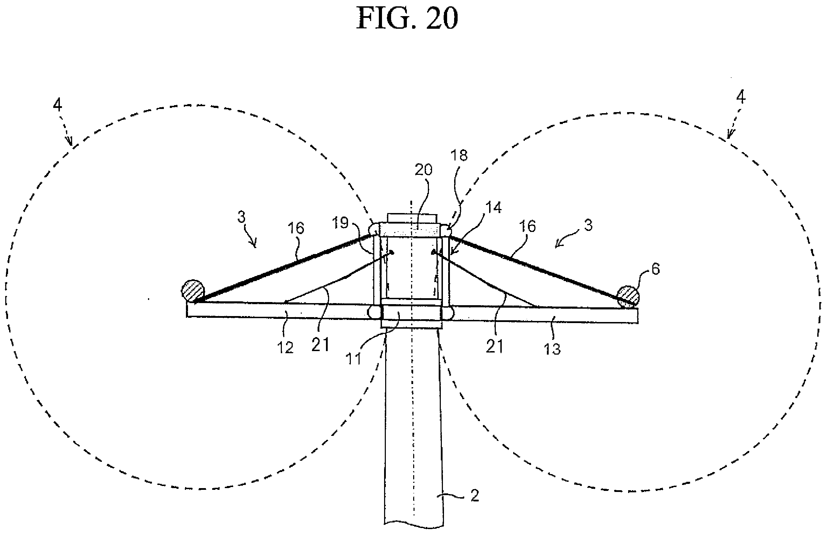

Note that the present invention is not limited to this example, and the support point on one end side of the backup wire 21 may also be set in the tower part 2. In this case, in the state where the support member 3 has become unable to support the wind turbine part 4 and the support member 3 might fall, the tower part 2 supports the load via the backup wire 21. Fig. 20 shows a case where one end of the backup wire 21 is connected to the tower part 2 above the first elongated member 12 or the second elongated member 13, and the other end of the backup wire 21 is connected to the intermediate part of the first elongated member 12 or the intermediate part of the second elongated member 13. Since the connection part 11 is turnable around the tower part 2 within the substantially horizontal plane in normal time (the second yaw revolution described above), the yaw revolution mechanism may also be attached to the connection part of the tower part 2, but the support point on one end side of the backup wire 21 is desirably in the first coupling member 14 and in the vicinity of the upper end side of the first coupling member 14.

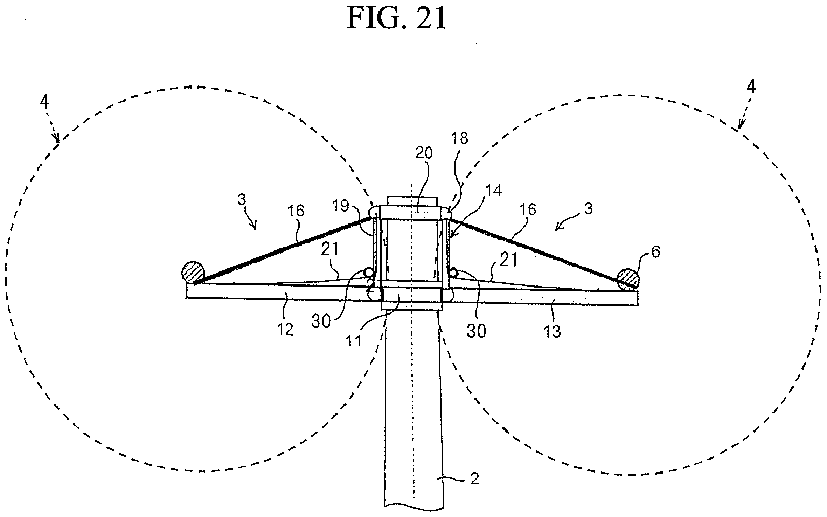

Further, the backup wire 21 may be supported not only at the support point at each end, but may be supported at the intermediate point by another mechanism such as a pulley mechanism as shown in Fig. 21. A pulley 30 of the pully mechanism is, for example, fixed to the first coupling member 14 in the vicinity of the connection part 11, and the backup wire 21 is provided in the vicinity of the upper end side of the first coupling member 14 and along the longitudinal direction of the first elongated member 12 or the second elongated member 13. Hence a space can be formed between the first elongated member 12 or the second elongated member 13 and the wire member 16, so that it is possible to reduce resistance due to the wind as compared to the case of installing only the backup wire 21 and to prevent occurrence of individual vibration of the backup wires 21.

### [Second Example]

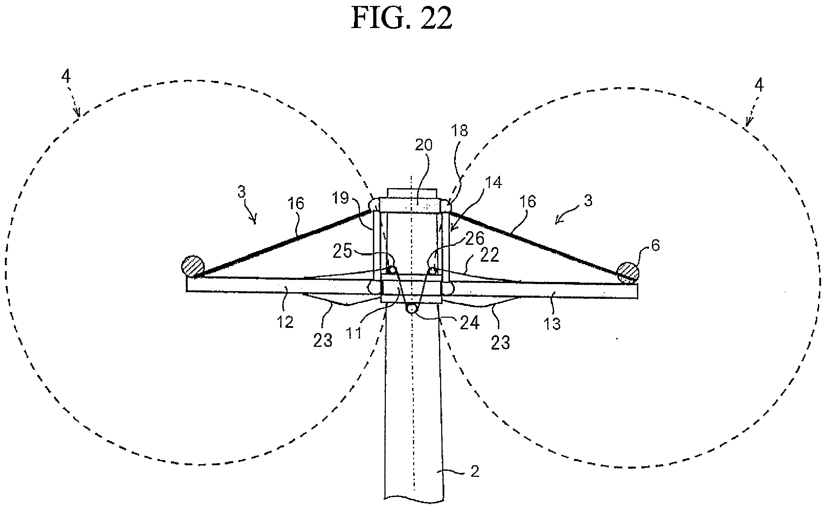

Each of backup wires 22, 23 shown in Fig. 22 is an example of the auxiliary member. One end of the backup wire 22 is connected to the first elongated member 12, and the other end of the backup wire 22 is connected to the second elongated member 13.

With the wind turbine generator 1 in the normal state, the backup wires 22, 23 are installed such that tension is not added thereto. For example, as shown in Fig. 22, the backup wires 22, 23 are installed in the state of being warped along the first elongated member 12 and the second elongated member 13.

The backup wires 22, 23 have elements (e.g., wire diameter, wire type) with which predetermined tension can be transmitted when the wire member 16 is broken. In the state where the support member 3 has become unable to support the wind turbine part 4 and the support member 3 might fall, the backup wires 22, 23 support the loads of the support member 3 and the wind turbine part 4 to prevent the falling.

The backup wire 22 may be supported not only at the support point at each end, but may be supported at the intermediate point by a wire reeving mechanism having a pulley and the like. As shown in Fig. 22, pulleys 24, 25, 26 are, for example, fixed to the connection part 11. For example, the pulley 24 is installed at the center of the tower part 2, and the pulleys 25, 26 are respectively installed on the first elongated member 12 side and the second elongated member 13 side. The pulleys 25, 26 are provided at higher positions than the pulley 24 and at higher positions than the upper surfaces of the first elongated member 12 and the second elongated member 13.

One end of the backup wire 22 is connected to the upper surface of the first elongated member 12, the pulley 25, the pulley 24, and the pulley 26 are led around in this order from the first elongated member 12 side to the second elongated member 13 side, and the other end of the backup wire 22 is connected to the upper surface of the second elongated member 13.

Two backup wires 23 are installed. One end of each of the backup wires 23 is connected to the lower surface of the first elongated member 12 or the lower surface of the second elongated member 13, and the other end of each of the backup wires 23 is connected to the connection part 11.

In a state where one of the right and left support members 3 has become unable to support the wind turbine part 4 and the support member 3 might fall, each of the backup wires 22, 23 transmits a force to the other support member 3 and supports the loads of the support member 3 and the wind turbine part 4 on the basis of the other support member 3, to prevent the falling. At this time, an upward force acts on the other support member 3 by the backup wire 22. By the backup wires 23 being installed on the lower side, tension also acts on the backup wires 23, and hence the upward movement of the other support member 3 can be prevented.

In a state where both the support members 3 have become unable to support the wind turbine part 4 and the support members 3 might fall, the backup wires 22, 23 balance the loads of both the support members 3 and the wind turbine part 4 to prevent the falling.

Only one for each of the backup wires 22, 23 may be installed, or two or more may be installed in parallel.

As described above, the support member 3 according to the present embodiment is connected to the tower part 2 via the connection part 11, so that the attachment positions of the pulleys 24, 25, 26 and the support point on the other end side of the backup wires 23 can be taken as the connection part 11. Note that the present invention is not limited to this example, and it goes without saying that the numbers, the attachment positions, or the like of the pulleys 24, 25, 26 may be changed as long as being within a range where the force transmission and the like are possible.

According to the present embodiment, it is possible to form a space between the first elongated member 12 or the second elongated member 13 and the wire member 16. Further, with the backup wires 22, 23 being provided along the first elongated member 12 and the second elongated member 13, it is possible to prevent occurrence of individual vibration of the backup wires 22, 23.

### [Third Example]

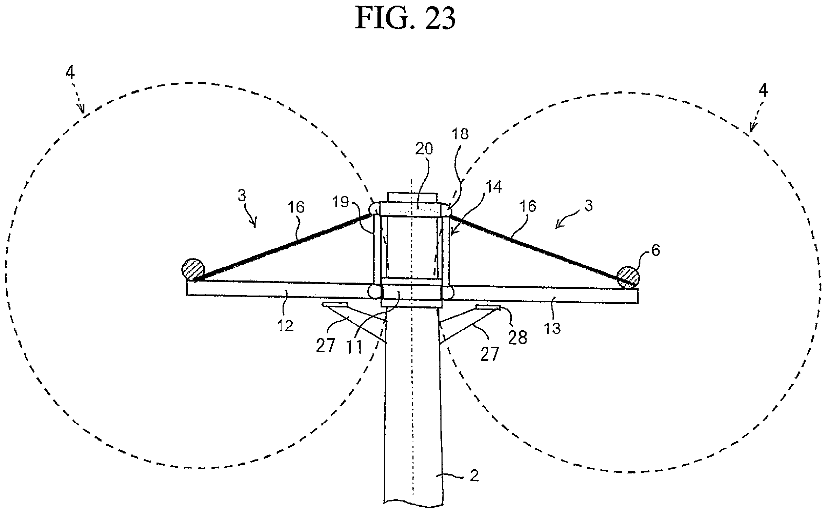

A support structure 27 shown in Fig. 23 is an example of the auxiliary member. The support structure 27 is a structural body having rigidity and is, for example, a steel tubular member of a rectangular column, or the like. The support structure 27 has one end connected to the tower part 2 and is extended in an obliquely upward direction with respect to the axial direction of the tower part 2. With the wind turbine generator 1 in the normal state, the other end of the support structure 27 is disposed apart from the bottom of the first elongated member 12 or the second elongated member 13 of the support member 3. A gap between the lower surface of the first elongated member 12 or the second elongated member 13 of the support member 3 and the upper surface of the support structure 27 is assumed to be such a distance at which the support structure 27 does not restrict the first elongated member 12 or the second elongated member 13 even when vertical vibration occurs due to the wind or the like.

The support structure 27 has elements (e.g., sectional area, compression strength) with which a predetermined compressive force can be transmitted when the wire member 16 is broken. In the state where the support member 3 has become unable to support the wind turbine part 4 and the support member 3 might fall, the support structure 27 transmits a load to the tower part 2 and supports the loads (self-loads) of the support member 3 and the wind turbine part 4 from below, to prevent the falling.

A rubber-made buffer 28 may be installed on the upper surface of the support structure 27, with which the first elongated member 12 or the second elongated member 13 having fallen comes into contact. Hence a shocking load that is generated at the time of falling can be reduced to prevent further damage on the first elongated member 12 or the second elongated member 13. Although the flat configuration is shown in the figure, when the wind turbine part is configured to make the second yaw revolution, a mechanism to rotate in accordance with the yaw revolution is attached to the coupled place of the support structure 27 on the tower part 2.

### [Fourth Example]

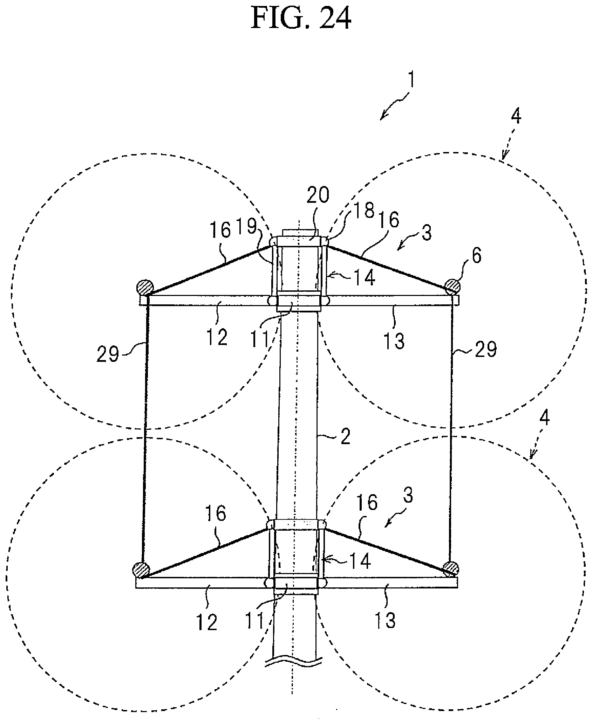

In Fig. 24, when the support members 3 and the wind turbine parts 4 are disposed vertically on a plurality of levels, one end of a backup wire 29 is connected to the support member 3 disposed on the upper side and the other end of the backup wire 29 is connected to another support member 3 disposed on the lower side.

With the wind turbine generator 1 in the normal state, the backup wire 29 is installed such that tension is not added thereto. The backup wire 29 has elements (e.g., wire diameter, wire type) with which predetermined tension can be transmitted when the wire member 16 is broken. In a state where the lower-level support member 3 has become unable to support the wind turbine part 4 and the lower-level support member 3 might fall, the backup wire 29 transmits a force to the upper-level support member 3 and supports the loads of the lower-level support member 3 and the wind turbine part 4 on the basis of the upper-level support member 3, to prevent the falling.

By previously installing the upper-level support member 3 in combination with the example of the auxiliary member described above, even when the upper-level support member 3 is damaged as well as the lower-level support member 3, the stability of the structure can be ensured.

### [Fifth Example]

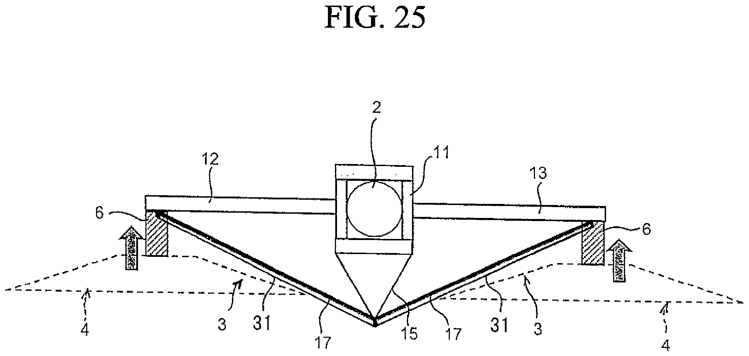

Next, with reference to Figs. 25 to 31, a description will be given of an auxiliary member that is applied in a state where the support member 3 has become unable to support the wind turbine part 4 and the support member 3 might shake in the front-rear direction.

The support member 3 becomes unable to support the wind turbine part 4 and the support member 3 might shake in the front-rear direction when, for example, the above-mentioned wire member 17 which bears the horizontal load by a pulling force is broken.
In this case, since the connection part 11 and the first elongated member 12 or the second elongated member 13 are connected to each other by pin coupling, the first elongated member 12 or the second elongated member 13 turns about the pin coupling portion as a fulcrum, and the tip side on which the wind turbine part 4 is provided shakes in the front-rear direction.

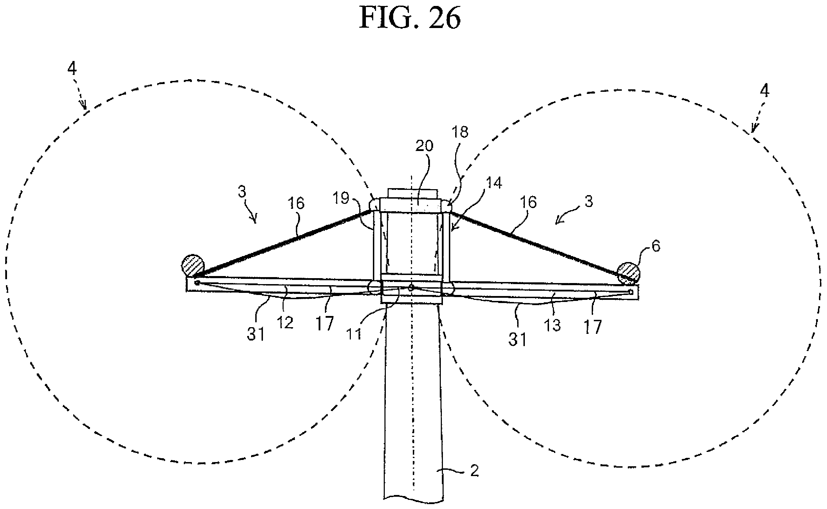

A backup wire (first auxiliary wire member) 31 shown in each of Figs 25 and 26 is an example of the auxiliary member. One end of the backup wire 31 is connected to the second coupling member 15, and the other end of the backup wire 31 is connected to the tip side of the first elongated member 12 or the second elongated member 13.

With the wind turbine generator 1 in the normal state, the backup wire 31 is installed such that tension is not added thereto. For example, as shown in Figs. 25 and 26, the backup wire 31 is installed in the state of being warped along the wire member 17. A support point at each end of the backup wire 31 is the same as or in the vicinity of the support point of the wire member 17. In this case, the backup wire 31 is longer than the wire member 16 so that tension is not added.

The backup wire 31 has elements (e.g., wire diameter, wire type) with which predetermined tension corresponding to a thrust force can be transmitted when the wire member 17 is broken. In the state where the support member 3 has become unable to support the wind turbine part 4 and the support member 3 might shake in the front-rear direction, the backup wire 31 supports the loads of the support member 3 and the wind turbine part 4 on the basis of the other support member 3 and the tower part 2, to prevent the shake in the front-rear direction.

The backup wire 31 may be fastened with a clip or the like on the wire member 17 at the intermediate point. In this case, the backup wire 31 is fastened such that tension is not transmitted to the wire member 17. This enables reduction in width of shaking of the backup wire 31 due to the wind or the like.

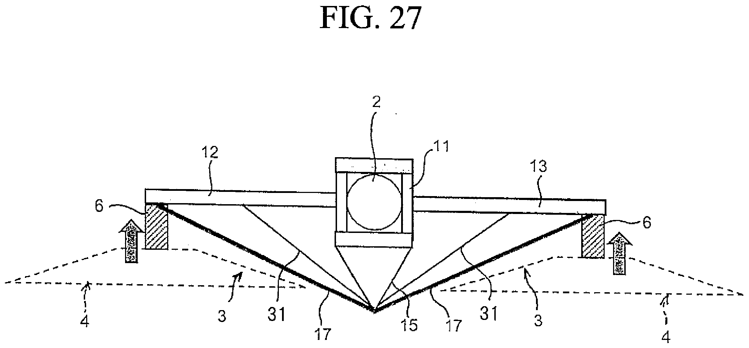

Further, the backup wire 31 is not limited to the case where the backup wire 31 is installed along the wire member 17, but may be provided in a position different from the wire member 17 as shown in Figs. 27 to 30. When the backup wire 31 is installed along the wire member 17, in a state where the wire member 17 is broken by an external factor such as some flying object, the backup wire 31 installed along the wire member 17 might be broken simultaneously. By the backup wire 31 being installed in a position different from the wire member 17, it is possible to reduce the risk of simultaneous damage on the wire member 17 and the backup wire 31.

For example, as shown in Figs. 27 to 29, one end of the backup wire 31 is connected to the second coupling member 15, and the other end of the backup wire 31 is connected to the intermediate part of the first elongated member 12 or the intermediate part of the second elongated member 13.

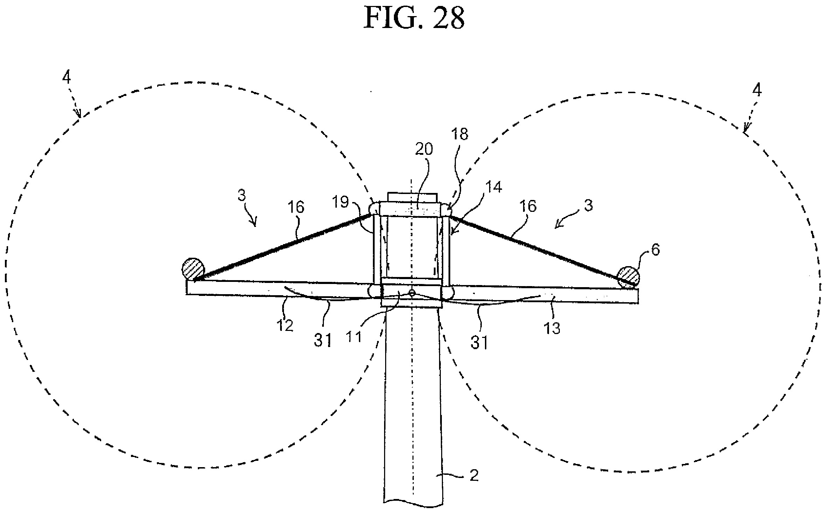

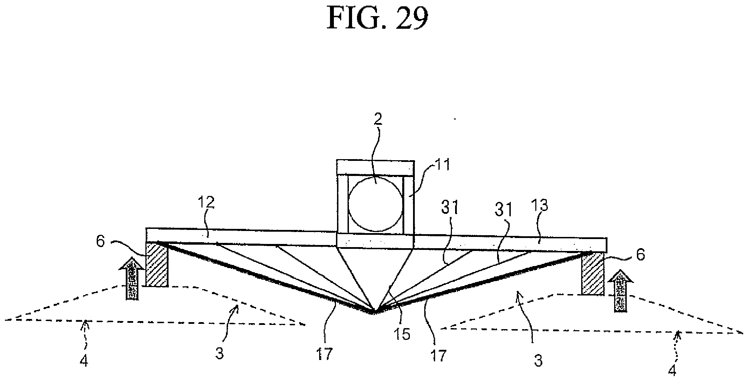

Only one backup wire 31 may be installed on the first elongated member 12 or the second elongated member 13 as shown in Figs. 27 and 28, or two or more backup wires 21 may be installed as shown in Fig. 29.

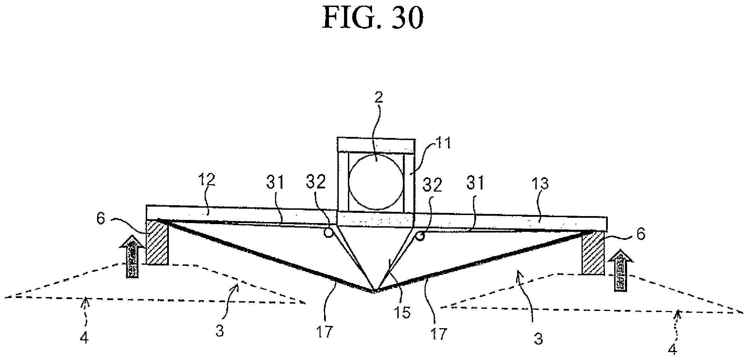

Further, the backup wire 31 may be supported not only at the support point at each end, but may be supported at the intermediate point by another mechanism such as a pulley mechanism as shown in Fig. 30. A pulley 32 of the pully mechanism is, for example, fixed to the first elongated member 12 or the second elongated member 13 in the vicinity of the connection part 11, and the backup wire 31 is provided on the second coupling member 15 and along the longitudinal direction of the first elongated member 12 or the second elongated member 13. Hence a space can be formed between the first elongated member 12 or the second elongated member 13 and the wire member 17, so that it is possible to reduce resistance due to the wind as compared to the case of only installing the backup wire 31 and to prevent occurrence of individual vibration of the backup wires 31.

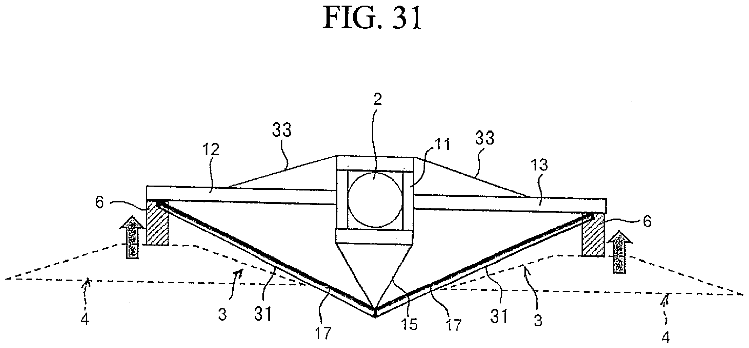

The backup wire 31 has been shown as the backup structure that resists against a thrust force to which the wind turbine part 4 is subjected, but there is a possibility, depending on the wind condition or the like, that the wind turbine part 4 may shake in the opposite direction as well as in the direction in which the wind turbine part 4 is subjected to the thrust force. In that case, as shown in Fig. 31, a backup wire (second auxiliary wire member) 33 may be installed on the surface opposite to the installation surface of the backup wire 31, the backup wire 33 connecting between the connection part 11 and the tip or the intermediate part of each of the first elongated member 12 and the second elongated member 13. By providing the backup wire 33, even when the wind turbine part 4 shakes in the direction opposite to the direction in which the wind turbine part 4 is subjected to the thrust force, it is possible, more preferably, to support the loads of the support member 3 and the wind turbine part 4 on the basis of the other support member 3 and the tower part 2, to prevent the shaking in the front-rear direction.

### [Sixth Example]

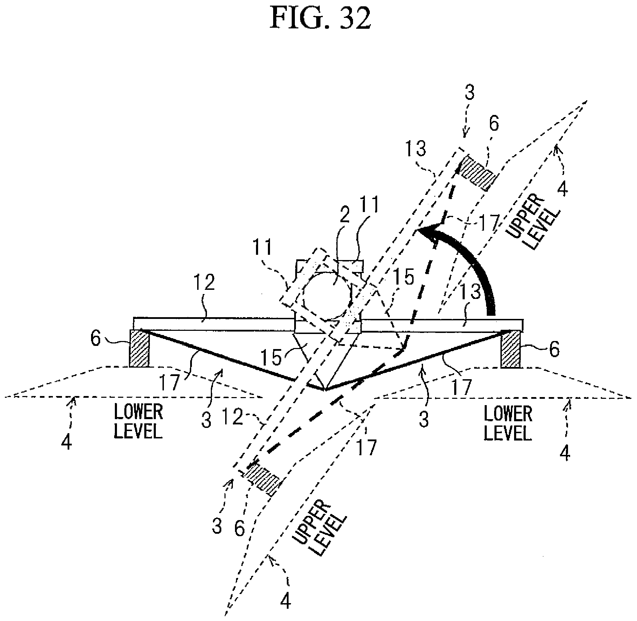

Next, with reference to Fig. 32, a description will be given of a method for preventing damage by controlling the yaw angle of the support member 3.

Even in the case where the support members 3 and the wind turbine parts 4 are disposed vertically and the example of the auxiliary member described above is installed, when the upper-level support member 3 becomes unable to support the wind turbine part 4, the support member 3 can be prevented from falling, but the support member 3 moves downward, though slightly. In this case, the upper-level blade 8 and the lower-level blade 8 might come into contact with each other to be damaged, depending on the clearance between the blades 8.

Accordingly, the wind turbine generator 1 may further be provided with a sensor (detection part) and a rotation drive part.

The sensor detects attachment and detachment of the support member 3 disposed on the upper level to and from the tower part 2 (e.g., the breaking of the wire member 16, the falling of the first elongated member 12 or the second elongated member 13, etc.). When the sensor detects the support member 3 that has come off the tower part 2, the rotation drive part causes the support members 3 disposed on the upper side and/or the lower side to rotate and make a yaw revolution around the tower part 2.

Accordingly, for example, when the sensor detects the wire member 16 that has been broken, the rotation drive part forcibly changes the yaw angle of the support member 3. As a result, as shown in Fig. 32, an angle can be formed in the planar positional relationship between the upper-level wind turbine part 4 and the lower-level wind turbine part 4. Thus, even when the upper-level support member 3 moves downward, the contact between the upper-level blade 8 and the lower-level blade 8 can be avoided.

The forcible yaw revolution of the support member 3 described above may be made only on one of the upper level and the lower level or may be made on both the upper level and the lower level. By making the upper-level revolving direction and the lower-level revolving direction opposite to each other, it is possible to reduce (e.g. into about a half) the time taken until a predetermined angle is formed in the planar positional relationship between the upper-level wind turbine part 4 and the lower-level wind turbine part 4. As a result, the safety can further be improved. The example of the two levels has been shown in the present example, but, needless to say, even when a plurality of levels being three of more levels are provided, a similar effect can be obtained by applying a similar sensor and control.

### [Third Embodiment]

Hereinafter, a wind turbine generator 1 according to a third embodiment of the present invention will be described with reference to the drawings.

There has been a fear that, when the support member moves back and forth with the connection portions with the tower part as a fulcrum by reason that a wire member resisting against a force in a thrust direction is broken or other reason, the support member may come into contact with a member installed around the tower part.

The present embodiment has been made in view of such circumstances, and it is an object of the present invention to provide a wind turbine generator that is capable of avoiding contact of a support member and a blade of a wind turbine part installed on the support member, with a tower part and a blade of the other wind turbine part when the support member comes off the tower part.

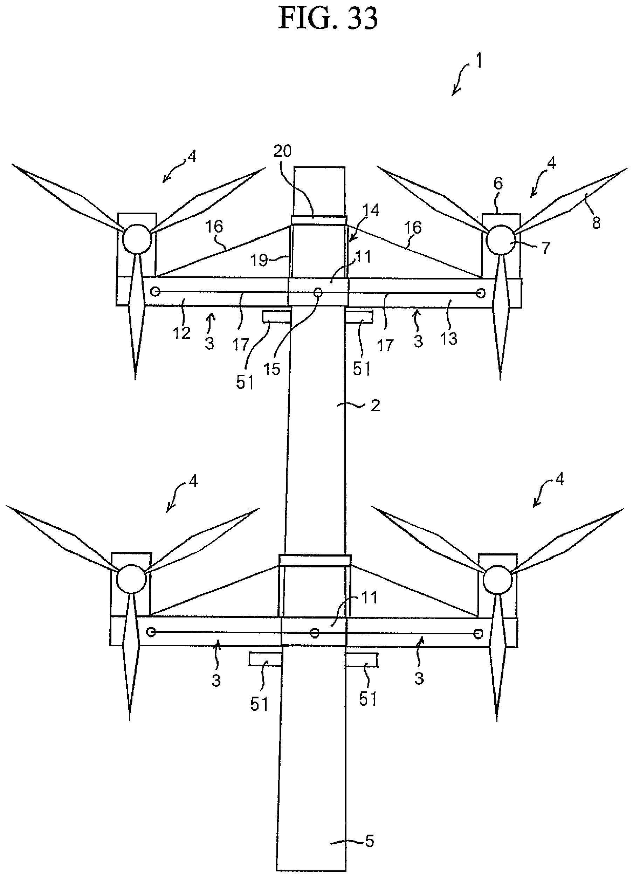

As shown in Fig. 33, the wind turbine generator 1 according to the present embodiment is provided with one tower part 2, a plurality of support members 3 connected to the tower part 2, wind turbine parts 4 installed on the respective support members 3, a guide member 51 that defines the falling direction of the support member 3 when the support member 3 falls, and the like. The wind turbine generator 1 is interconnected for transmitting generated power to a utility grid, and installed on land or at sea.

In the present embodiment, a case has been described where the angle formed by the first elongated member 12 and the second elongated member 13 is 180°, but the present invention is not limited to this example. The first elongated member 12 and the second elongated member 13 may be provided such that the angle formed by the first elongated member 12 and the second elongated member 13 is smaller than 180° on the side where the blade 8 of the wind turbine part 4 receives the wind.

Further, in the present invention, a case has been described where the first elongated member 12 and the second elongated member 13 are disposed substantially parallel to the horizontal direction, but the present invention is not limited to this example. For example, the axial direction of each of the first elongated member 12 and the second elongated member 13 may be provided obliquely such that the tip side of each of the first elongated member 12 and the second elongated member 13 is located at a higher position than the base end side thereof.

Unlike the first embodiment, the present embodiment further includes the guide member. In the following, the description of the constituent elements overlapping those in the first embodiment will be omitted.

### <Guide member>

Next, the guide member 51 provided in the wind turbine generator 1 of the present embodiment will be described. When the support member 3 becomes unable to normally support the wind turbine part 4, the guide member 51 guides the falling support member 3 in a prescribed direction.

The support member 3 becomes unable to support the wind turbine part 4 and the support member 3 falls when, for example, the above-mentioned wire member 16 which bears the perpendicular load by a pulling force is broken. In this case, since the first coupling member 14 and the first elongated member 12 or the second elongated member 13 are connected to each other by pin coupling, the first elongated member 12 or the second elongated member 13 turns about the pin coupling portion as a fulcrum, and the tip side falls downward.

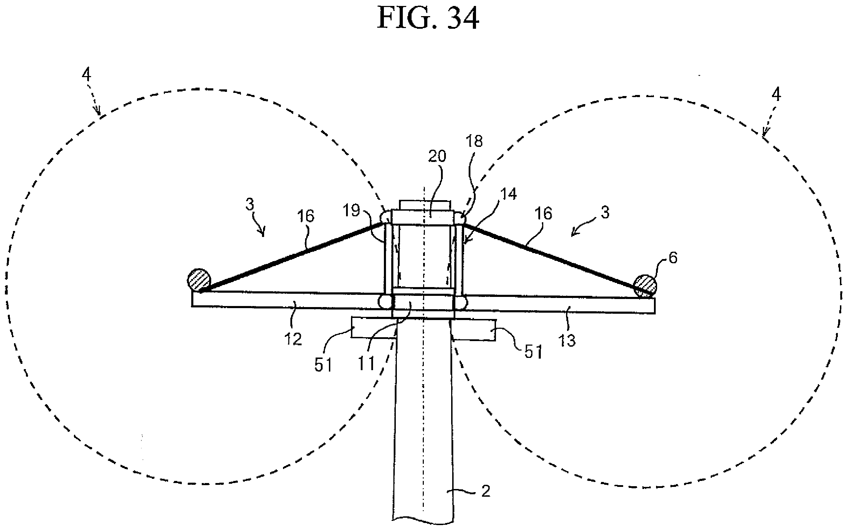

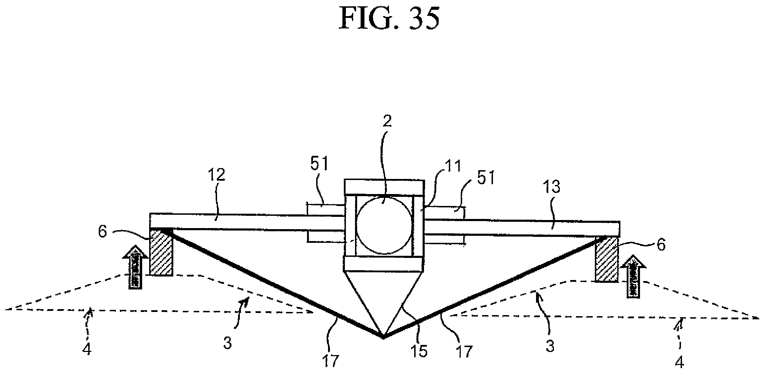

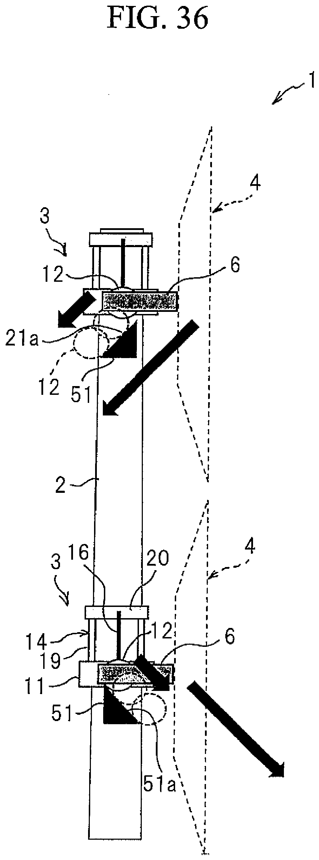

As shown in Figs. 33 to 36, the guide member 51 is provided projecting from the tower part 2 below the support member 3, namely, below the first elongated member 12 or the second elongated member 13. The upper surface 51a of the guide member 51 is tilted to the front or the rear of the wind turbine part 4. In the example shown in Fig. 36, the upper surface 51a of the upper-level guide member 51 is tilted to the rear of the wind turbine part 4, and the upper surface 51a of the lower-level guide member 51 is tilted to the front of the wind turbine part 4. Further, the guide member 51 has a triangular shape in a side view in the example of Fig. 36.

With the guide member 51 being installed below the first elongated member 12 or the second elongated member 13, for example, when the wire member 16 is broken and the first elongated member 12 or the second elongated member 13 turns about the pin coupling portion as a fulcrum, the first elongated member 12 or the second elongated member 13 collides with the guide member 51.

The coupling portion between the connection part 11 and the first elongated member 12 or between the connection part 11 and the second elongated member 13 is formed by pin coupling, and thus has a structure freely rotatable in all directions. Thus, by the tilting of the upper surface 51a of the guide member 51 to the front or the rear of the wind turbine part 4, the first elongated member 12 or the second elongated member 13 moves along the upper surface 51a of the guide member 51. For example, when the upper surface 51a of the guide member 51 is tilted to the rear of the wind turbine part 4, the first elongated member 12 or the second elongated member 13 is guided to the rear.

Therefore, when the support member 3 falls, it is possible to prevent movement of the first elongated member 12 or the second elongated member 13 toward the tower part 2 and to avoid collision of the support member 3 or the wind turbine part 4 with the tower part 2. Further, in the case where the support members 3 or the wind turbine parts 4 on a plurality of levels are installed vertically, when the upper-side support member 3 falls, it is possible to prevent movement of the support member 3 and the wind turbine part 4 on the upper side toward the support member 3 and the wind turbine part 4 on the lower side, and to avoid collision of the support members 3 with the wind turbine parts 4 on the upper side and the lower side.

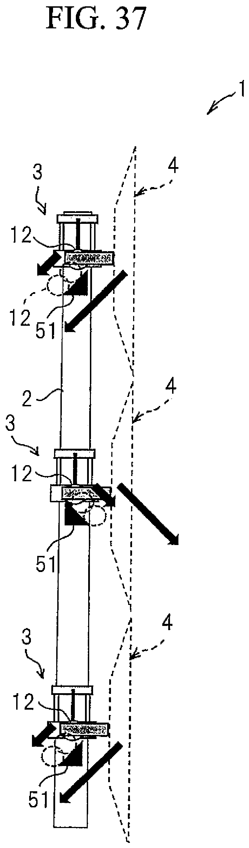

When the support member 3 and the wind turbine part 4 on a plurality of levels are installed vertically, as shown in Figs. 36 and 37, the guide member 51 may be provided below the support member 3 on each level. In this case, the tilting direction of the upper surface 51a of the guide member 51 disposed on the upper level may be opposite to the tilting direction of the upper surface 51a of the guide member 51 disposed on the lower level. The example shown in Fig. 36 represents a case where the support members 3 and the wind turbine parts 4 are installed on two levels, and the example shown in Fig. 37 represents a case where the support members 3 and the wind turbine parts 4 are installed on three levels. Thus, when both the upper-level and lower-level support members 3 fall, the direction in which the first elongated member 12 or the second elongated member 13 on the upper level moves along the upper surface 51a is opposite to the direction in which the first elongated member 12 or the second elongated member 13 on the lower level moves along the upper surface 51a. It is thus possible to reliably separate the upper-level support member 3 and the lower-level support member 3 in the falling states, and to reduce the possibility of collision of the support member 3 and the wind turbine part 4 on the upper level with the support member 3 and the wind turbine part 4 on the lower level.

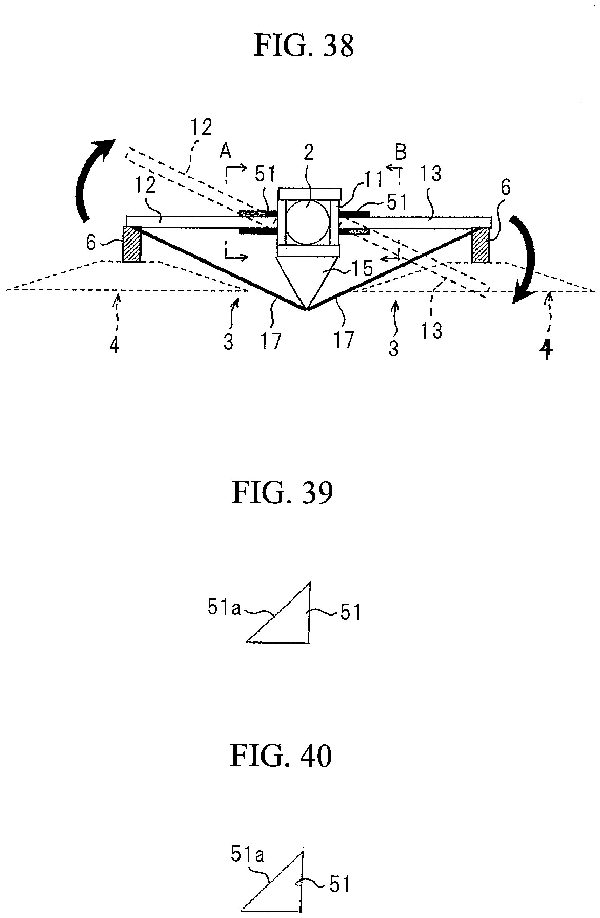

In the present embodiment, the support member 3 and the wind turbine part 4 are installed on both the right and left sides with the tower part 2 at the center. Thus, as shown in Figs. 38 to 40, the tilting direction of the upper surface 51a of the guide member 51 disposed on the left side (one side) in a front view may be opposite to the tilting direction of the upper surface 51a of the guide member 51 disposed on the right side (the other side). Note that Fig. 39 is an arrow view along a line A-A of Fig. 38, and Fig. 40 is an arrow view along a line B-B of Fig. 38. Thus, when both the right and left support members 3 fall, the direction in which the first elongated member 12 moves along the upper surface 51a is opposite to the direction in which the second elongated member 13 moves along the upper surface 51a. It is thus possible to prevent collision of the support member 3 and the wind turbine part 4 on the left side with the support member 3 and the wind turbine part 4 on the right side in front of the tower part 2.

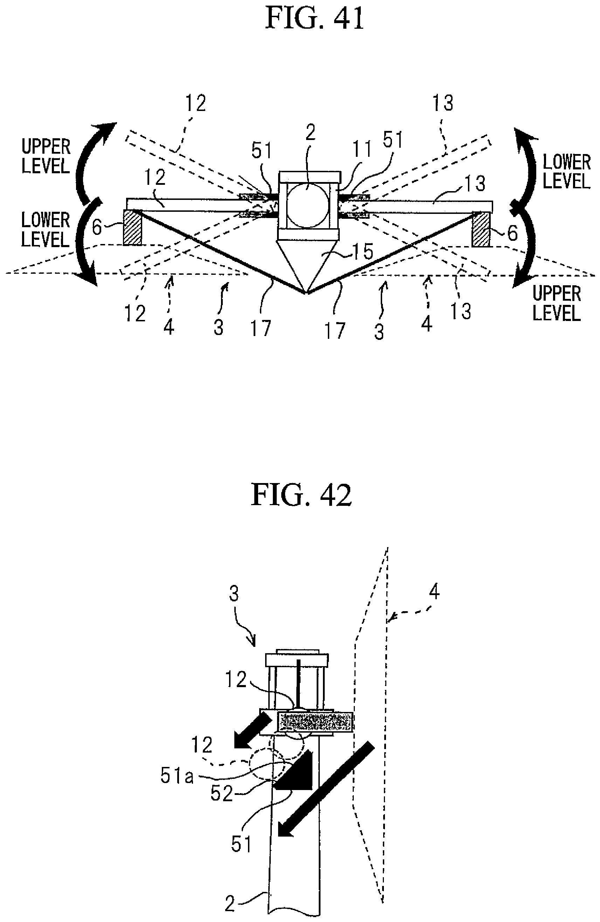

When the support member 3 and the wind turbine part 4 on a plurality of levels are installed vertically, the example described using Fig. 38 and the example described using Figs. 38 to 40 may be combined. That is, while the tilting direction of the upper surface 51a of the guide member 51 disposed on the upper side is made opposite to the tilting direction of the upper surface 51a of the guide member 51 disposed on the lower side, the tilting direction of the upper surface 51a of the guide member 51 disposed on the left side (one side) in a front view is made opposite to the tilting direction of the upper surface 51a of the guide member 51 disposed on the right side (the other side). This can result in more reliable prevention of the collision between each support members 3 and each wind turbine parts 4 as shown in Fig. 41.

As shown in Fig. 42, a buffer 52 made of rubber, for example, may be installed on the upper surface 51a of the guide member 51. Hence a shocking load that is generated at the time of falling can be reduced to prevent further damage on the first elongated member 12 or the second elongated member 13. Further, with the buffer 52 installed, it is possible to gradually decrease the falling velocity of the support member 3 and reduce a collision load that is applied to the tower part 2.

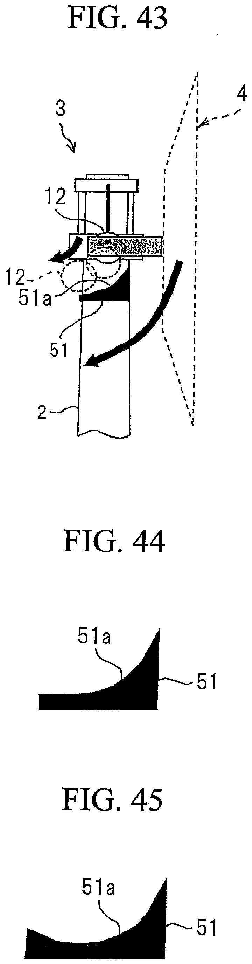

The upper surface 51a of the guide member 51 is not limited to the case where the upper surface 51a is the tilted surface with a constant tilting angle. For example, as shown in Figs. 43 to 45, the tilting angle of the upper surface 51a may be set such that an angle in the lower part is larger than an angle in the upper part. Hence it is possible to gradually reduce the falling velocity of the support member 3.

The example shown in Fig. 44 represents a case where the tilting angle of the upper surface 51a is 0° in the lowermost part of the upper surface 51a. In the example shown in Fig. 45, on the end side of the lower part of the upper surface 51a, inclination is made with an angle (negative angle) opposite to an angle of the tilted surface on which the first elongated member 12 or the second elongated member 13 moves at the time of falling from the upper part to the lower part. Hence the falling velocity of the support member 3 can be gradually reduced, and depending on the falling velocity, the movement of the support member 3 can be stopped.

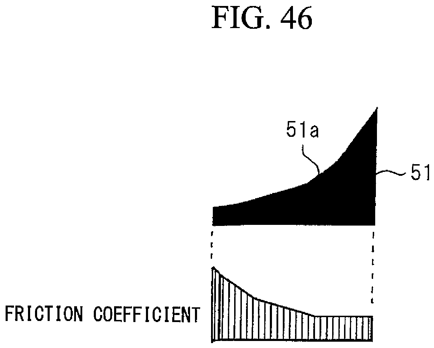

Further, as shown in Fig. 46, on the upper surface 51a of the guide member 51, a friction coefficient of a lower part is higher than that of an upper part. Also, in this case, it is possible to gradually reduce the falling velocity of the support member 3. On the upper surface 51a, a difference in friction coefficient in accordance with the height is set by, for example, installing a material that enhances the friction coefficient or performing surface treatment. Thus, similarly to the case where the tilting angle of the upper surface 51a is set to be a negative angle, the falling velocity of the support member 3 can be gradually reduced, and depending on the falling velocity, the movement of the support member 3 can be stopped.

Further, in the connection portion of the guide member 51 and the tower part 2, the guide member turning mechanism (guide member turning means), not shown, may be provided, the mechanism making the guide member 51 turnable around the tower part 2 on the substantially horizontal plane. The guide member turning mechanism turns the guide member 51 around the tower part 2 so as to follow the second yaw revolution of the support member 3. That is, when the wind turbine part 4 makes the second yaw revolution, the guide member turning means causes the guide member 51 to turn such that the guide member 51 is kept in a position substantially perpendicularly below the support member 3.

By providing the guide member turning mechanism, even when the wind turbine part 4 makes the second yaw revolution, the guide member 51 can guide the falling support member 3 in a prescribed direction.

### [Reference Signs List]

- 1: wind turbine generator
- 2: tower part
- 3: support member
- 4: wind turbine part
- 5: foundation part
- 6: nacelle
- 7: hub
- 8: blade
- 11: connection part
- 12: first elongated member
- 13: second elongated member
- 14: first coupling member
- 15: second coupling member
- 16: wire member
- 17: wire member
- 18: tension adjustment mechanism
- 19: tubular member
- 20: connection member
- 21: backup wire
- 22: backup wire
- 23: backup wire
- 24: pulley
- 25: pulley
- 26: pulley
- 27: support structure
- 28: buffer
- 29: backup wire
- 30: pulley
- 31: backup wire
- 32: pulley
- 33: backup wire
- 41: horizontal member
- 42: vertical member
- 43: diagonal member
- 44: pillar member
- 45: coupling part

- 51: guide member
- 51a: upper surface
- 52: buffer

## Claims

1. A wind turbine generator (1) comprising:
a tower part (2);
a plurality of wind turbine parts (4) each including a rotor, blades (8) provided on the rotor, and a power generator that generates power by a rotational force of the rotor;
a support member (3) that is connected to the tower part (2) and supports the wind turbine part (4); and
an auxiliary member in the form of a backup wire (21,31) not normally under tension and having one end connected to the tower part (2) and the other end connected to the support member (3), **characterized in that** the support member (3) includes
a connection part (11) connected to the tower part (2),
a first elongated member (12) having one end side connected to the connection part (11) and the other end side supporting the wind turbine part (4),
a first coupling member (14) having one end side connected to the one end side of the first elongated member (12) and the other end side provided above the first elongated member (12), and
a linear first wire member (16) having one end connected to the other end side of the first coupling member (14) and the other end connected to the other end side of the first elongated member (12), and
the auxiliary member (21, 31) is configured so as to prevent falling of the first elongated member (12) when the support member (3) has become unable to support the wind turbine part (4).

2. The wind turbine generator (1) according to claim 1, wherein the auxiliary member is a linear wire and has one end connected to the first coupling member (14) and the other end connected to the first elongated member (12).

3. The wind turbine generator (1) according to claim 1, wherein the auxiliary member is a linear wire and has one end connected to the support member (3) disposed on one side with respect to the tower part (2), and the other end connected to another support member disposed on the other side being an opposite side across the tower part (2).

4. The wind turbine generator (1) according to claim 1, wherein
a plurality of levels of the support members (3) are disposed vertically, and
the auxiliary member is a linear wire and has one end connected to the support member (3) disposed on an upper side and the other end connected to another support member disposed on a lower side.

5. The wind turbine generator (1) according to claim 1, wherein
a plurality of levels of the support members (3) are disposed vertically, and
the wind turbine generator (1) further comprises:
a detection part capable of detecting attachment and detachment of the support member (3) disposed on the upper side to and from the tower part (2); and
a rotation drive part that rotates the support members (3) disposed on the upper side and/or the lower side around the tower part (2) when the detection part detects the support member (3) that comes off the tower part (2).

6. The wind turbine generator (1) according to claim 1, wherein
the support member (3) comprises
a second coupling member (15) installed on the connection part (11) and provided projecting from the connection part (11) in a direction different from a direction of the first elongated member (12),
a linear second wire member having one end connected to a tip side of the second coupling member (15) and the other end connected to the other end side of the first elongated member (12), and
the auxiliary member is configured so as to prevent shaking of the first elongated member (12) in a front-rear direction.

7. The wind turbine generator (1) according to claim 6, wherein the auxiliary member is a linear wire and includes a first auxiliary wire member having one end connected to the second coupling member (15) and the other end connected to the first elongated member (12).

8. The wind turbine generator according to claim 7, wherein
the auxiliary member is a linear wire and includes a second auxiliary wire member having one end connected to the connection part (3) and the other end connected to the first elongated member (12), and
the second auxiliary wire member is disposed on an opposite side to the first auxiliary wire member with the first elongated member (12) taken as a reference.

9. The wind turbine generator (1) according to claim 1, further comprising
a guide member (51) provided projecting from the tower part (2) below the support member (3) and having an upper surface (51a) tilted to a front or a rear of the wind turbine part (4).

10. The wind turbine generator (1) according to claim 9, wherein
a plurality of levels of the support members (3) are disposed vertically,
the guide member (51) is provided below each of the support members (3), and
a tilting direction of the upper surface (51a) of the guide member (51) disposed on the upper side is opposite to a tilting direction of the upper surface (51a) of the guide member (51) disposed on the lower side.

11. The wind turbine generator (1) according to claim 9, wherein
the support members (3) are disposed on both sides across the tower part (2),
the guide member (51) is provided below each of the support members (3), and
a tilting direction of the upper surface (51a) of the guide member (51) disposed on one side is opposite to a tilting direction of the upper surface (51a) of the guide member (51) disposed on the other side being the opposite side across the tower part (2).

12. The wind turbine generator (1) according to claim 9,
wherein a buffer is installed on the upper surface (51a) of the guide member (51).

13. The wind turbine generator (1) according to claim 9, wherein an angle in a lower part of the tilted upper surface (51a) of the guide member (51) is larger than an angle of an upper part of the upper surface (51a).

14. The wind turbine generator (1) according to claim 9, wherein a friction coefficient in a lower part of the tilted upper surface (51a) of the guide member (51) is higher than a friction coefficient in an upper part of the upper surface (51a) .

15. The wind turbine generator (1) according to claim 9, wherein
the support member (3) includes
a second coupling member (15) installed on the connection part (11) and provided projecting from the connection part (11) in a direction different from a direction of the first elongated member (12), and
a linear second wire member having one end connected to a tip side of the second coupling member (15) and the other end connected to the other end side of the first elongated member (12).

16. The wind turbine generator (1) according to claim 9, further comprising:
a support member turning means capable of turning the support member (3) around the tower part (2), and
a guide member turning means capable of turning the guide member (51) around the tower part so as to follow the support member (3) turned by the support member turning means.

17. The wind turbine generator (1) according to claim 1, wherein
the first elongated member (12) is disposed substantially parallel to a horizontal direction.

18. The wind turbine generator (1) according to claim 1, wherein
the support member (3) includes
a second elongated member (13) having one end side connected on a side 180° opposite to the first elongated member (12) with respect to the tower part (2), and the other end side supporting the wind turbine part (4),
a second coupling member (15) installed on the connection part (11) and provided projecting from the connection part (11) in a direction in which an angle formed by the first elongated member (12) and the second elongated member is 90°,
a linear first wire member having one end connected to a tip side of the second coupling member (15) and the other end connected to the other end side of the first elongated member (12), and
a linear second wire member having one end connected to the tip side of the second coupling member (15) and the other end connected to the other end side of the second elongated member (13).

19. The wind turbine generator (1) according to claim 17 or 18, wherein the connection part 11) is configured to be turnable around the tower part (2) within a horizontal plane.

20. The wind turbine generator (1) according to claim 17 or 18, wherein the support member (3) has a truss structure.

21. The wind turbine generator (1) according to claim 17 or 18, wherein the tower part (2) includes a plurality of pillar members (44) and a coupling part rigidly joined to the pillar members (44).

22. The wind turbine generator according to claim 17 or 18, wherein the pillar member (44) of the tower part (2) has a streamline-shaped cross section.

23. A wind turbine generator (1) comprising:
a tower part (2);
a plurality of wind turbine parts (4) each including a rotor, blades (8) provided on the rotor, and a power generator that generates power by a rotational force of the rotor;
a support member (3) that is connected to the tower part (2) and supports the wind turbine part (4); and
**characterized in that** it includes a support structure (27) having rigidity and having one end connected to the tower part (2) and the other end disposed away from a bottom of the support member (3), and **in that** the support member (3) includes
a connection part (11) connected to the tower part (2),
a first elongated member (12) having one end side connected to the connection part (11) and the other end side supporting the wind turbine part (4),
a first coupling member (14) having one end side connected to the one end side of the first elongated member (12) and the other end side provided above the first elongated member (12), and
a linear first wire member (16) having one end connected to the other end side of the first coupling member (14) and the other end connected to the other end side of the first elongated member (12), and
the support structure (27) is configured so as to prevent falling of the first elongated member (12) when the support member (3) has become unable to support the wind turbine part (4).

## Patentansprüche

1. Windturbinengenerator (1), der umfasst:
einen Turmteil (2);
eine Vielzahl von Windturbinenteilen (4), die jeweils einen Rotor, Blätter (8), die an dem Rotor bereitgestellt sind, und einen Leistungsgenerator umfassen, der Leistung durch eine Drehkraft des Rotors erzeugt;
ein Tragelement (3), das mit dem Turmteil (2) verbunden ist und den Windturbinenteil (4) trägt; und
ein Zusatzelement in der Form eines Sicherungsdrahts (21; 31), das normalerweise nicht unter Spannung steht und von dem ein Ende mit dem Turmteil (2) verbunden ist und das andere Ende mit dem Tragelement (3) verbunden ist, **dadurch gekennzeichnet, dass** das Tragelement (3) umfasst:
einen Verbindungsteil (11), der mit dem Turmteil (2) verbunden ist,
ein erstes längliches Element (12), von dem eine Endseite mit dem Verbindungsteil (11) verbunden ist und die andere Endseite den Windturbinenteil (4) trägt,
ein erstes Kopplungselement (14), von dem eine Endseite mit der einen Endseite des ersten länglichen Elements (12) verbunden ist und die andere Endseite über dem ersten länglichen Element (12) bereitgestellt ist, und
ein geradliniges erstes Drahtelement (16), von dem ein Ende mit der anderen Endseite des ersten Kopplungselements (14) verbunden ist und das andere Ende mit der anderen Endseite des ersten länglichen Elements (12) verbunden ist, und
das Zusatzelement (21, 31) ausgestaltet ist, um das Herabfallen des ersten länglichen Elements (12) zu verhindern, wenn das Tragelement (3) nicht mehr in der Lage ist, den Windturbinenteil (4) zu tragen.

2. Windturbinengenerator (1) nach Anspruch 1, wobei das Zusatzelement ein geradliniger Draht ist und von dem ein Ende mit dem ersten Kopplungselement (14) verbunden ist und das andere Ende mit dem ersten länglichen Element (12) verbunden ist.

3. Windturbinengenerator (1) nach Anspruch 1, wobei das Zusatzelement ein geradliniger Draht ist und von dem ein Ende mit dem Tragelement (3) verbunden ist, das an einer Seite in Bezug auf den Turmteil (2) angeordnet ist, und das andere Ende mit einem anderen Tragelement verbunden ist, das auf der anderen Seite angeordnet ist, die eine durch den Turmteil (2) entgegengesetzte Seite ist.

4. Windturbinengenerator (1) nach Anspruch 1, wobei
eine Vielzahl von Ebenen der Tragelemente (3) vertikal angeordnet sind, und
das Zusatzelement ein geradliniger Draht ist und von dem ein Ende mit dem Tragelement (3) verbunden ist, das an einer oberen Seite angeordnet ist, und das andere Ende mit einem anderen Tragelement verbunden ist, das an einer unteren Seite angeordnet ist.

5. Windturbinengenerator (1) nach Anspruch 1, wobei
eine Vielzahl von Ebenen der Tragelemente (3) vertikal angeordnet sind, und
der Windturbinengenerator (1) ferner umfasst:
einen Detektionsteil, der in der Lage ist, die Befestigung und Lösung des an der oberen Seite angeordneten Tragelements (3) an und von dem Turmteil (2) zu detektieren; und
einen Drehantriebsteil, der die Tragelemente (3), die an der oberen Seite und/oder der unteren Seite um den Turmteil (2) angeordnet sind, dreht, wenn der Detektionsteil detektiert, dass das Tragelement (3) sich von dem Turmteil (2) löst.

6. Windturbinengenerator (1) nach Anspruch 1, wobei
das Tragelement (3) umfasst:
ein zweites Kopplungselement (15), das an dem Verbindungsteil (11) eingerichtet ist und von dem Verbindungsteil (11) in einer Richtung hervorstehend bereitgestellt ist, die sich von einer Richtung des ersten länglichen Elements (12) unterscheidet,
ein geradliniges zweites Drahtelement, von dem ein Ende mit einer Spitzenseite des zweiten Kopplungselements (15) verbunden ist und das andere Ende mit der anderen Endseite des ersten länglichen Elements (12) verbunden ist, und
das Zusatzelement ausgestaltet ist, um das Erschüttern des ersten länglichen Elements (12) in einer Vorwärts-Rückwärts-Richtung zu verhindern.

7. Windturbinengenerator (1) nach Anspruch 6, wobei das Zusatzelement ein geradliniger Draht ist und ein erstes Zusatzdrahtelement umfasst, von dem ein Ende mit dem zweiten Kopplungselement (15) verbunden ist und das andere Ende mit dem ersten länglichen Element (12) verbunden ist.

8. Windturbinengenerator nach Anspruch 7, wobei
das Zusatzelement ein geradliniger Draht ist und ein zweites Zusatzdrahtelement umfasst, von dem ein Ende mit dem Verbindungsteil (3) verbunden ist und das andere Ende mit dem ersten länglichen Element (12) verbunden ist, und
das zweite Zusatzdrahtelement an einer Seite angeordnet ist, die, wenn das erste längliche Element (12) als Bezug genommen wird, dem ersten Zusatzdrahtelement entgegengesetzt ist.

9. Windturbinengenerator (1) nach Anspruch 1, der ferner umfasst:
ein Führungselement (51), das von dem Turmteil (2) unter dem Tragelement (3) hervorstehend bereitgestellt ist und eine obere Oberfläche (51a) aufweist, die zu einer vorderen oder einer hinteren Seite des Windturbinenteils (4) geneigt ist.

10. Windturbinengenerator (1) nach Anspruch 9, wobei
eine Vielzahl von Ebenen der Tragelemente (3) vertikal angeordnet sind,
das Führungselement (51) unter jedem von den Tragelementen (3) bereitgestellt ist, und
eine Neigungsrichtung der oberen Oberfläche (51a) des Führungselements (51), das an der oberen Seite angeordnet ist, entgegengesetzt zu einer Neigungsrichtung der oberen Oberfläche (51a) des Führungselements (51) ist, das an der unteren Seite angeordnet ist.

11. Windturbinengenerator (1) nach Anspruch 9, wobei
die Tragelemente (3) auf beiden Seiten durch den Turmteil (2) angeordnet sind,
das Führungselement (51) unter jedem von den Tragelementen (3) bereitgestellt ist, und
eine Neigungsrichtung der oberen Oberfläche (51a) des Führungselements (51), das an einer Seite angeordnet ist, entgegengesetzt zu einer Neigungsrichtung der oberen Oberfläche (51a) des Führungselements (51) ist, das an der anderen Seite angeordnet ist, die die durch den Turmteil (2) entgegengesetzte Seite ist.

12. Windturbinengenerator (1) nach Anspruch 9, wobei ein Puffer an der oberen Oberfläche (51a) des Führungselements (51) eingerichtet ist.

13. Windturbinengenerator (1) nach Anspruch 9, wobei ein Winkel in einem unteren Teil der geneigten oberen Oberfläche (51a) des Führungselements (51) größer als ein Winkel eines oberen Teils der oberen Oberfläche (51a) ist.

14. Windturbinengenerator (1) nach Anspruch 9, wobei ein Reibungskoeffizient in einem unteren Teil der geneigten oberen Oberfläche (51a) des Führungselements (51) höher als ein Reibungskoeffizient in einem oberen Teil der oberen Oberfläche (51a) ist.

15. Windturbinengenerator (1) nach Anspruch 9, wobei
das Tragelement (3) umfasst:
ein zweites Kopplungselement (15), das an dem Verbindungsteil (11) eingerichtet ist und von dem Verbindungsteil (11) in einer Richtung hervorstehend bereitgestellt ist, die sich von einer Richtung des ersten länglichen Elements (12) unterscheidet, und
ein gradliniges zweites Drahtelement, von dem ein Ende mit einer Spitzenseite des zweiten Kopplungselements (15) verbunden ist und das andere Ende mit der anderen Endseite des ersten länglichen Elements (12) verbunden ist.

16. Windturbinengenerator (1) nach Anspruch 9, der ferner umfasst:
ein Tragelement-Drehmittel, das in der Lage ist, das Tragelement (3) um den Turmteil (2) zu drehen, und
ein Führungselement-Drehmittel, das in der Lage ist, das Führungselement (51) um den Turmteil zu drehen, um dem durch das Tragelement-Drehmittel gedrehten Tragelement (3) zu folgen.

17. Windturbinengenerator (1) nach Anspruch 1, wobei
das erste längliche Element (12) im Wesentlichen parallel zu einer horizontalen Richtung angeordnet ist.

18. Windturbinengenerator (1) nach Anspruch 1, wobei das Tragelement (3) umfasst:
ein zweites längliches Element (13), von dem eine Endseite an einer Seite verbunden ist, die in Bezug auf den Turmteil (2) dem ersten länglichen Element (12) um 180° entgegengesetzt ist, und die andere Endseite den Windturbinenteil (4) trägt,
ein zweites Kopplungselement (15), das an dem Verbindungsteil (11) eingerichtet ist und von dem Verbindungsteil (11) in einer Richtung hervorstehend bereitgestellt ist, in der ein Winkel, der von dem ersten länglichen Element (12) und dem zweiten länglichen Element gebildet wird, 90° beträgt,
ein geradliniges erstes Drahtelement, von dem ein Ende mit einer Spitzenseite des zweiten Kopplungselements (15) verbunden ist und das andere Ende mit der anderen Endseite des ersten länglichen Elements (12) verbunden ist, und
ein geradliniges zweites Drahtelement, von dem ein Ende mit der Spitzenseite des zweiten Kopplungselements (15) verbunden ist und das andere Ende mit der anderen Endseite des zweiten länglichen Elements (13) verbunden ist.

19. Windturbinengenerator (1) nach Anspruch 17 oder 18, wobei der Verbindungsteil (11) ausgestaltet ist, um innerhalb einer horizontalen Ebene um den Turmteil (2) drehbar zu sein.

20. Windturbinengenerator (1) nach Anspruch 17 oder 18, wobei das Tragelement (3) eine Fachwerkstruktur aufweist.

21. Windturbinengenerator (1) nach Anspruch 17 oder 18, wobei der Turmteil (2) eine Vielzahl von Säulenelementen (44) und einen Kopplungsteil umfasst, der starr mit den Säulenelementen (44) verbunden ist.

22. Windturbinengenerator nach Anspruch 17 oder 18, wobei das Säulenelement (44) des Turmteils (2) einen stromlinienförmigen Querschnitt aufweist.

23. Windturbinengenerator (1), der umfasst:
einen Turmteil (2);
eine Vielzahl von Windturbinenteilen (4), die jeweils einen Rotor, Blätter (8), die an dem Rotor bereitgestellt sind, und einen Leistungsgenerator umfassen, der durch eine Drehkraft des Rotors Leistung erzeugt;
ein Tragelement (3), das mit dem Turmteil (2) verbunden ist und den Windturbinenteil (4) trägt; und
**dadurch gekennzeichnet, dass** es eine Tragstruktur (27) umfasst, die Steifigkeit aufweist und von der ein Ende mit dem Turmteil (2) verbunden ist und das andere Ende von einer unteren Seite des Tragelements (3) weg angeordnet ist, und dadurch, dass das Tragelement (3) umfasst:
einen Verbindungsteil (11), der mit dem Turmteil (2) verbunden ist,
ein erstes längliches Element (12), von dem eine Endseite mit dem Verbindungsteil (11) verbunden ist und die andere Endseite den Windturbinenteil (4) trägt,
ein erstes Kopplungselement (14), von dem eine Endseite mit der einen Endseite des ersten länglichen Elements (12) verbunden ist und die andere Endseite über dem ersten länglichen Element (12) bereitgestellt ist, und
ein geradliniges erstes Drahtelement (16), von dem ein Ende mit der anderen Endseite des ersten Kopplungselements (14) verbunden ist und das andere Ende mit der anderen Endseite des ersten länglichen Elements (12) verbunden ist, und
die Tragstruktur (27) ausgestaltet ist, um das Herabfallen des ersten länglichen Elements (12) zu verhindern, wenn das Tragelement (3) nicht mehr in der Lage ist, den Windturbinenteil (4) zu tragen.

## Revendications

1. Générateur d'éolienne (1) comprenant :
une partie de tour (2) ;
une pluralité de parties d'éolienne (4) comprenant chacune un rotor, des aubes (8) prévues sur le rotor, et un générateur d'électricité qui génère de l'énergie électrique grâce à une force de rotation du rotor ;
un élément de support (3) qui est raccordé à la partie de tour (2) et supporte la partie d'éolienne (4) ; et
un élément auxiliaire sous la forme d'un fil de secours (21, 31) normalement pas sous tension et ayant une extrémité raccordée à la partie de tour (2) et l'autre extrémité raccordée à l'élément de support (3), **caractérisé en ce que** l'élément de support (3) comprend :
une partie de raccordement (11) raccordée à la partie de tour (2),
un premier élément allongé (12) ayant un côté d'extrémité raccordé à la partie de raccordement (11) et l'autre côté d'extrémité supportant la partie d'éolienne (4),
un premier élément de couplage (14) ayant un côté d'extrémité raccordé au un côté d'extrémité du premier élément allongé (12) et l'autre côté d'extrémité prévu au-dessus du premier élément allongé (12), et
un premier élément de fil linéaire (16) ayant une extrémité raccordée à l'autre côté d'extrémité du premier élément de couplage (14) et l'autre extrémité raccordée à l'autre côté d'extrémité du premier élément allongé (12), et
l'élément auxiliaire (21, 31) est configuré afin d'empêcher la chute du premier élément allongé (12) lorsque l'élément de support (3) est devenu incapable de supporter la partie d'éolienne (4).

2. Générateur d'éolienne (1) selon la revendication 1, dans lequel l'élément auxiliaire est un fil linéaire et a une extrémité raccordée au premier élément de couplage (14) et l'autre extrémité raccordée au premier élément allongé (12).

3. Générateur d'éolienne (1) selon la revendication 1, dans lequel l'élément auxiliaire est un fil linéaire et a une extrémité raccordée à l'élément de support (3) disposé sur un côté par rapport à la partie de tour (2), et l'autre extrémité raccordée à un autre élément de support disposé sur l'autre côté qui est un côté opposé de part et d'autre de la partie de tour (2).

4. Générateur d'éolienne (1) selon la revendication 1, dans lequel :
une pluralité de niveaux des éléments de support (3) sont disposés verticalement, et
l'élément auxiliaire est un fil linéaire et a une extrémité raccordée à l'élément de support (3) disposé sur un côté supérieur et l'autre extrémité raccordée à un autre élément de support disposé sur un côté inférieur.

5. Générateur d'éolienne (1) selon la revendication 1, dans lequel :
une pluralité de niveaux des éléments de support (3) sont disposés verticalement, et
le générateur d'éolienne (1) comprend en outre :
une partie de détection capable de détecter la fixation et le détachement de l'élément de support (3) disposé sur le côté supérieur à et de la partie de tour (2) ; et
une partie d'entraînement de rotation qui fait tourner les éléments de support (3) disposés sur le côté supérieur et/ou le côté inférieur autour de la partie de tour (2) lorsque la partie de détection détecte l'élément de support (3) qui sort de la partie de tour (2).

6. Générateur d'éolienne (1) selon la revendication 1, dans lequel :
l'élément de support (3) comprend :
un second élément de couplage (15) installé sur la partie de raccordement (11) et prévu en saillie à partir de la partie de raccordement (11) dans une direction différente d'une direction du premier élément allongé (12),
un second élément de fil linéaire ayant une extrémité raccordée à un côté de pointe du second élément de couplage (15) et l'autre extrémité raccordée à l'autre côté d'extrémité du premier élément allongé (12), et
l'élément auxiliaire est configuré afin d'empêcher de secouer le premier élément allongé (12) dans la direction avant - arrière.

7. Générateur d'éolienne (1) selon la revendication 6, dans lequel l'élément auxiliaire est un fil linéaire et comprend un premier élément de fil auxiliaire ayant une extrémité raccordée au second élément de couplage (15) et l'autre extrémité raccordée au premier élément allongé (12).

8. Générateur d'éolienne selon la revendication 7, dans lequel :
l'élément auxiliaire est un fil linéaire et comprend un second élément de fil auxiliaire ayant une extrémité raccordée à la partie de raccordement (3) et l'autre extrémité raccordée au premier élément allongé (12), et
le second élément de fil auxiliaire est disposé sur un côté opposé au premier élément de fil auxiliaire avec le premier élément allongé (12) pris en tant que référence.

9. Générateur d'éolienne (1) selon la revendication 1, comprenant en outre :
un élément de guidage (51) prévu en saillie à partir de la partie de tour (2) au-dessous de l'élément de support (3) et ayant une surface supérieure (51a) inclinée vers une partie avant ou une partie arrière de la partie d'éolienne (4).

10. Générateur d'éolienne (1) selon la revendication 9, dans lequel :
une pluralité de niveaux des éléments de support (3) sont disposés verticalement,
l'élément de guidage (51) est prévu au-dessous de chacun des éléments de support (3), et
une direction d'inclinaison de la surface supérieure (51a) de l'élément de guidage (51) disposé sur le côté supérieur est opposée à une direction d'inclinaison de la surface supérieure (51a) de l'élément de guidage (51) disposé sur le côté inférieur.

11. Générateur d'éolienne (1) selon la revendication 9, dans lequel :
les éléments de support (3) sont disposés des deux côtés de part et d'autre de la partie de tour (2),
l'élément de guidage (51) est prévu au-dessous de chacun des éléments de support (3), et
une direction d'inclinaison de la surface supérieure (51a) de l'élément de guidage (51) disposé sur un côté est opposée à une direction d'inclinaison de la surface supérieure (51a) de l'élément de guidage (51) disposé sur l'autre côté qui est le côté opposé de part et d'autre de la partie de tour (2).

12. Générateur d'éolienne (1) selon la revendication 9, dans lequel un tampon est installé sur la surface supérieure (51a) de l'élément de guidage (51).

13. Générateur d'éolienne (1) selon la revendication 9, dans lequel un angle dans une partie inférieure de la surface supérieure inclinée (51a) de l'élément de guidage (51) est supérieur à un angle d'une partie supérieure de la surface supérieure (51a).

14. Générateur d'éolienne (1) selon la revendication 9, dans lequel un coefficient de friction dans une partie inférieure de la surface supérieure inclinée (51a) de l'élément de guidage (51) est supérieur à un coefficient de friction dans une partie supérieure de la surface supérieure (51a).

15. Générateur d'éolienne (1) selon la revendication 9, dans lequel :
l'élément de support (3) comprend :
un second élément de couplage (15) installé sur la partie de raccordement (11) et prévu en saillie à partir de la partie de raccordement (11) dans une direction différente d'une direction du premier élément allongé (12), et
un second élément de fil linéaire ayant une extrémité raccordée à un côté de pointe du second élément de couplage (15) et l'autre extrémité raccordée à l'autre côté d'extrémité du premier élément allongé (12).

16. Générateur d'éolienne (1) selon la revendication 9, comprenant en outre :
un moyen de rotation d'élément de support capable de faire tourner l'élément de support (3) autour de la partie de tour (2), et
un moyen de rotation d'élément de guidage capable de faire tourner l'élément de guidage (51) autour de la partie de tour afin de suivre l'élément de support (3) entraîné en rotation par le moyen de rotation d'élément de support.

17. Générateur d'éolienne (1) selon la revendication 1, dans lequel :
le premier élément allongé (12) est disposé sensiblement parallèlement à une direction horizontale.

18. Générateur d'éolienne (1) selon la revendication 1, dans lequel :
l'élément de support (3) comprend :
un second élément allongé (13) ayant un côté d'extrémité raccordé à un côté opposé à 180° au premier élément allongé (12) par rapport à la partie de tour (2), et l'autre côté d'extrémité supportant la partie d'éolienne (4),
un second élément de couplage (15) installé sur la partie de raccordement (11) et prévu en saillie à partir de la partie de raccordement (11) dans une direction dans laquelle un angle formé par le premier élément allongé (12) et le second élément allongé est de 90°,
un premier élément de fil linéaire ayant une extrémité raccordée à un côté de pointe du second élément de couplage (15) et l'autre extrémité raccordée à l'autre côté d'extrémité du premier élément allongé (12), et
un second élément de fil linéaire ayant une extrémité raccordée au côté de pointe du second élément de couplage (15) et l'autre extrémité raccordée à l'autre côté d'extrémité du second élément allongé (13).

19. Générateur d'éolienne (1) selon la revendication 17 ou 18, dans lequel la partie de raccordement (11) est configurée pour pouvoir tourner autour de la partie de tour (2) dans un plan horizontal.

20. Générateur d'éolienne (1) selon la revendication 17 ou 18, dans lequel l'élément de support (3) a une structure en treillis.

21. Générateur d'éolienne (1) selon la revendication 17 ou 18, dans lequel la partie de tour (2) comprend une pluralité d'éléments de pilier (44) et une partie de couplage rigidement assemblée aux éléments de pilier (44).

22. Générateur d'éolienne (1) selon la revendication 17 ou 18, dans lequel l'élément de pilier (44) de la partie de tour (2) a une section transversale en forme de ligne aérodynamique.

23. Générateur d'éolienne (1) comprenant :
une partie de tour (2) ;
une pluralité de parties d'éolienne (4) comprenant chacune un rotor, des aubes (8) prévues sur le rotor, et un générateur d'électricité qui génère de l'énergie électrique grâce à une force de rotation du rotor ;
un élément de support (3) qui est raccordé à la partie de tour (2) et supporte la partie d'éolienne (4) ; et
**caractérisé en ce qu'**il comprend une structure de support (27) présentant une rigidité et ayant une extrémité raccordée à la partie de tour (2) et l'autre extrémité disposée à distance d'un fond de l'élément de support (3) et **en ce que** l'élément de support (3) comprend :
une partie de raccordement (11) raccordée à la partie de tour (2),
un premier élément allongé (12) ayant un côté d'extrémité raccordé à la partie de raccordement (11) et l'autre côté d'extrémité supportant la partie d'éolienne (4),
un premier élément de couplage (14) ayant un côté d'extrémité raccordé au un côté d'extrémité du premier élément allongé (12) et l'autre côté d'extrémité prévu au-dessus du premier élément allongé (12), et
un premier élément de fil linéaire (16) ayant une extrémité raccordée à l'autre côté d'extrémité du premier élément de couplage (14) et l'autre extrémité raccordée à l'autre côté d'extrémité du premier élément allongé (12), et
la structure de support (27) est configurée afin d'empêcher la chute du premier élément allongé (12) lorsque l'élément de support (3) est devenu incapable de supporter la partie d'éolienne (4).
